(19) Europäisches Patentamt
European Patent Office
Office européen des brevets

(11) EP 2 936 049 B1

(12) EUROPÄISCHE PATENTSCHRIFT

(45) Veröffentlichungstag und Bekanntmachung des Hinweises auf die Patenterteilung:
**30.09.2020 Patentblatt 2020/40**

(51) Int Cl.:
**G01B 11/22** *(2006.01)*  **G01B 11/245** *(2006.01)*
**G01B 11/25** *(2006.01)*

(21) Anmeldenummer: **13786235.5**

(22) Anmeldetag: **04.11.2013**

(86) Internationale Anmeldenummer:
**PCT/EP2013/072925**

(87) Internationale Veröffentlichungsnummer:
**WO 2014/095142 (26.06.2014 Gazette 2014/26)**

(54) **VORRICHTUNG UND VERFAHREN ZUR MESSUNG DER PROFILTIEFE EINES REIFENS**

APPARATUS AND METHOD FOR MEASURING THE PROFILE DEPTH OF A TIRE

DISPOSITIF ET PROCÉDÉ DE MESURE DE LA PROFONDEUR DES SCULPTURES D'UN PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012224260**

(43) Veröffentlichungstag der Anmeldung:
**28.10.2015 Patentblatt 2015/44**

(73) Patentinhaber: **Beissbarth GmbH**
**80993 München (DE)**

(72) Erfinder:
• **Luther, Marc**
**31228 Peine (DE)**

• **Nobis, Guenter**
**72622 Nuertingen (DE)**
• **Wingbermuehle, Jochen**
**30966 Hemmingen (DE)**
• **Uffenkamp, Volker**
**71642 Ludwigsburg (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
EP-A2- 1 967 835          WO-A1-2008/061770
JP-A- H0 792 058          JP-A- 2008 185 511
US-A1- 2008 037 033

## Beschreibung

Die Erfindung betrifft eine Vorrichtung und ein Verfahren zur Messung der Profiltiefe wenigstens eines Reifens, insbesondere eines Kfz-Reifens.

### Stand der Technik

Zur Messung der Profiltiefe von Reifen sind verschiedene Verfahren zur manuellen oder automatischen Profiltiefenmessung, mechanisch oder berührungslos messende Verfahren, sowie Verfahren zur Messung bei stehendem oder bei rollendem Fahrzeug bzw. Reifen bekannt.

Triangulationsverfahren mit Laserscannern zur Profiltiefenmessung in einem Rollenprüfstand werden beispielsweise in DE 197 05 047 A1 und EP 1 394 503 B1 beschrieben.

DE 43 16 984 beschreibt ein Verfahren zur Messung der Profiltiefe im Stand oder bei der Überfahrt über eine Messvorrichtung. Hierbei wird ein Triangulationssensor, der auf einem beweglichen Schlitten angeordnet ist, entlang einer Linie quer zur Abrollrichtung des Reifens verschoben.

WO 97/07380 A2 beschreibt die Anwendung eines Lichtschnittverfahrens mit einem oder mehreren Lichtschnitten zur Messung bei der Überfahrt, bei der sich die Messvorrichtung mit dem Fahrzeug mitbewegt.

DE 1 809 459 beschreibt ein Lichtschnittverfahren zur Messung der Profiltiefe bei der Überfahrt. Hierbei wird die Profiltiefe entlang einer einzelnen Linie parallel zur Drehachse des Reifens gemessen. Das Verfahren beruht im Wesentlichen auf der Untersuchung von Schatten des Profils, die von einer schräg einfallenden Lichtquelle erzeugt werden.

Die EP 04 69 948 A1 beschreibt ebenfalls eine Vorrichtung zur automatischen Ermittlung der Profiltiefe von Kraftfahrzeugen im fließenden Verkehr. Die Messvorrichtung befindet sich unter der Straßenoberfläche. Anstatt einer Lichtlinie quer zur Laufrichtung des Reifens werden mehrere Lichtpunkte gemessen und anhand von Leuchtdichteunterschieden der abgebildeten Punkte wird auf die Profiltiefe geschlossen. Zur Steigerung der Genauigkeit befinden sich mehrere Messeinrichtungen in Fahrtrichtung hintereinander.

DE 10 2009 016 498 A1 offenbart ein Verfahren zum Ermitteln der Profiltiefe eines Fahrzeugreifens, wobei der Reifen an einem Fahrzeug montiert ist, bei dem der Reifen über eine Messstation gerollt oder auf ihr abgestellt wird. Das Profil des Reifens wird auf mindestens einer Messlinie quer zur Rollrichtung des Reifens optisch abgetastet, wobei ein von einer Lichtquelle ausgehender Strahlenfächer an der Reifenoberfläche reflektiert wird und ein Signal des reflektierten Strahlenfächers von einem Sensor aufgenommen wird und das Signal des reflektierten Strahlenfächers mittels eines Triangulationsverfahrens ausgewertet wird.

DE 10 2006 062 447 A1 misst ebenfalls mittels eines Lichtschnitt-Triangulationsverfahrens einen Bereich des Reifenprofils während der Reifen über einem Spalt abrollt. Das Verfahren sieht vor, eine Beleuchtungslinie quer zur Abrollrichtung des Rades mit Hilfe eines mit hoher Geschwindigkeit rotierenden Prismas über die Profilfläche zu führen. Durch die sich parallel verschiebende Beleuchtungszeile kann der gesamte Ausschnitt des Reifens sequentiell und mit hoher Dichte abgetastet werden, während sich die auf dem Spalt befindliche Reifenoberfläche relativ zur Messvorrichtung im Ruhezustand befindet.

EP 0 469 948 B1, EP 1 952 092 B1 und US 7 578 180 B2 beschreiben weitere Varianten von Triangulationsverfahren zur Profilmessung bei der Überfahrt.

Es ist eine Aufgabe der Erfindung, eine verbesserte Vorrichtung und ein verbessertes Verfahren zur Messung der Profiltiefe eines Rades, insbesondere eines Kraftfahrzeuges, bereitzustellen, die für eine Vielzahl von Reifenbreiten geeignet sind, eine hohe Messgenauigkeit aufweisen und einfach zu bedienen bzw. auszuführen sind.

Die Aufgabe wird durch eine Vorrichtung nach dem unabhängigen Patentanspruch 1 und ein Verfahren nach dem unabhängigen Patentanspruch 9 gelöst. Die abhängigen Patentansprüche beschreiben mögliche Ausführungsformen einer erfindungsgemäßen Vorrichtung bzw. eines erfindungsgemäßen Verfahrens.

US 2012/008148 A1 offenbart eine Vorrichtung zur Vermessung der Lauffläche eines Reifens an einem Fahrzeug mit einem Laserliniengenerator.

Weitere Vorrichtungen und Verfahren zum Messen der Profiltiefe von Kraftfahrzeugreifen sind in US 2008/256815 A1, JP 2008 185511 A und WO 2008/061770 A1 gezeigt.

### Offenbarung der Erfindung

Die erfindungsgemäße Vorrichtung nach Anspruch 1 und das erfindungsgemäße Verfahren nach Anspruch 9 ermöglichen es, mit herkömmlichen Bauelementen, insbesondere mit marktgängigen kostengünstigen Flächenbildsensoren eine robuste und komfortable Messung der Profiltiefe von Kraftfahrzeugreifen mit nahezu beliebiger Breite zu realisieren.

In einer Ausführungsform sind die Beleuchtungseinrichtungen der Messmodule so ausgebildet, dass sie ein Muster, das mehrere Lichtlinien umfasst, auf das Profil projizieren. Durch die Verwendung eines Musters mit mehreren Lichtlinien anstelle einer einzigen Lichtlinie lassen sich die Robustheit der Messung und die Genauigkeit der Messergebnisse noch weiter verbessern.

In einer Ausführungsform weisen die Beleuchtungseinrichtungen jeweils wenigstens ein diffraktives optisches Element ("DOE") auf, um das Lichtmuster zu erzeugen. Diffraktive optische Elemente können einfacher als konventionelle optische Elemente zur Erzeugung von Lichtlinienmustern ausgelegt werden, erzeugen eine gleichmäßige Intensitätsverteilung und nutzen, anders als beispielsweise optische Masken, die Energie des einfallenden Lichtstrahls fast vollständig aus.

Erfindungsgemäß sind die Beleuchtungseinrichtungen so ausgebildet, dass die einzelnen Lichtlinien kodiert sind, so dass sie eindeutig identifizierbar und insbesondere eindeutig einem der Messmodule zuordenbar sind. Die Identifizierbarkeit der einzelnen Lichtlinien ist notwendig, um in Verbindung mit einer großen Anzahl an Linien eine hohe Messgenauigkeit zu erreichen.

Erfindungsgemäß sind die Lichtlinien zeitlich kodiert. Die Kodierung könnte auch eine räumliche, oder eine Kombination aus räumlicher und zeitlicher Kodierung umfassen. Dies ist aber nicht beansprucht. Eine räumliche Kodierung kann z.B. durch eine geeignet ausgebildetes diffraktives optisches Element, dass ein Linienmuster mit variierenden Linienabstand erzeugt, erreicht werden. Alternativ können auch die Breite der Linien, das Linienmuster und/oder die Linienform variiert werden.

Erfindungsgemäß wird eine zeitliche Kodierung der Linien vorgenommen, indem die Lichtlinien nicht gleichzeitig, sondern in einer vorgegebenen zeitlichen Abfolge auf das Reifenprofil projiziert werden.

In einer Ausführungsform weisen die Bildaufnahmeeinrichtungen jeweils wenigsten ein optisches Element auf, das ausgebildet ist, um den Bildaufnahmebereich der Bildaufnahmeeinrichtung optisch zu verzerren, insbesondere in Laufrichtung des Reifens zu verdichten und/oder quer zur Laufrichtung des Reifens aufzuweiten. Durch ein derartiges optisches Element kann die vorgegebene Aufnahmefläche des Flächenbildsensors optimal ausgenutzt werden, so dass die Genauigkeit der Messung bei gleichbleibendem finanziellem Aufwand verbessert werden kann. Als optisches Element kann insbesondere eine Zylinderlinse zum Einsatz kommen.

Alternativ oder zusätzlich kann die Ausnutzung der Aufnahmefläche des Bildsensors verbessert werden, indem der in der Regel rechteckige Flächenbildsensor um 90° gedreht angeordnet wird, so dass die Richtung des Reifenprofils, die parallel zur Laufrichtung des Reifens verläuft, in der eine höhere Auflösung erforderlich bzw. gewünscht ist, in der Richtung des Flächenbildsensors abgebildet wird, welche die höhere Anzahl an Bildpunkten aufweist.

In einer Ausführungsform sind die Messmodule so ausgebildet, dass die Beleuchtungseinrichtungen und Bildaufnahmeeinrichtungen der verschiedenen Messmodule in der Laufrichtung des zu vermessenden Reifens versetzt zueinander, d.h. in der Laufrichtung des Reifens hintereinander, angeordnet sind. Durch eine derartige versetzte Anordnung wird zuverlässig verhindert, dass die Lichtlinien eines Messmoduls in den Messbereich eines benachbarten Messmoduls projiziert werden. In diesem Fall wäre es nicht notwendig, die Lichtlinien erfindungsgemäß so zu kodieren, dass die Lichtlinien der einzelnen Messmodule voneinander unterschieden werden können; daher können die Beleuchtungseinrichtungen der einzelnen Messmodule identisch aufgebaut sein. Darüber hinaus kann mit Hilfe von in Fahrtrichtung des Fahrzeugs hintereinander angeordneten Messmodulen die Geschwindigkeit des Fahrzeugs bestimmt werden, ohne dass dafür ein zusätzlicher Sensor benötigt wird.

In einer Ausführungsform sind die diffraktiven optischen Elemente einander unmittelbar benachbarter Messmodule verdreht gegeneinander angeordnet, so dass die einander überlappenden Lichtmuster, die von den Beleuchtungseinrichtungen einander unmittelbar benachbarter Messmodule erzeugt werden, unterschiedlich kodiert sind. Aufgrund der unterschiedlichen Kodierung können die Lichtmuster eindeutig einem der Messmodule zugeordnet werden. Ist z.B. in einem ersten Messmodul ein diffraktives optisches Element so ausgebildet und angeordnet, dass sich der Abstand der von ihm erzeugten Lichtlinien in Fahrtrichtung des Fahrzeugs von hinten nach vorne vergrößert, so ist ein identisch ausgebildetes diffraktives optisches Element eines unmittelbar benachbarten zweiten Messmoduls um 180° gedreht so angeordnet, dass der Abstand der Lichtlinien des von dem zweiten diffraktiven optischen Element erzeugten Lichtmusters in Fahrtrichtung des Fahrzeugs von hinten nach vorne abnimmt.

Das diffraktive optische Element eines dem zweiten Messmodul benachbarten dritten Messmoduls ist dann wieder in der gleichen Ausrichtung wie das diffraktive optische Element des ersten Messmoduls angeordnet, das diffraktive optische Element eines vierten Messmoduls hat dann wieder die gleiche Ausrichtung, wie das diffraktive optische Element des zweiten Messmoduls usw. Auf diese Weise weisen einander überlappende Bereiche der Lichtmuster unmittelbar benachbarter Messmodule unterschiedliche Linienabstände auf, so dass die Lichtlinien über die gesamte Fahrzeugbreite eindeutig einem der Messmodule zugeordnet werden können.

In einer Ausführungsform beträgt der Winkel zwischen der Richtung, in der die Beleuchtungseinrichtung die Lichtlinie auf den Reifen projiziert und der Bildaufnahmerichtung der zugehörigen Bildaufnahmeeinrichtung 20° bis 45°, insbesondere 40°. Ein Winkel im Bereich von 20° bis 45° stellt einen guten Kompromiss zwischen einer möglichst hohen Messgenauigkeit und einer möglichst geringen Abschattung, die beide mit einem größer werdenden Winkel zwischen der Projektionsrichtung der Beleuchtungseinrichtung und der Bildaufnahmerichtung der zugehörigen Bildaufnahmeeinrichtung zunehmen, dar.

In einer Ausführungsform beträgt der Öffnungswinkel der Bildaufnahmeeinrichtungen ± 20°. Unter Annahme einer Rillenbreite von 4 mm und einer Rillentiefe von 8 mm für einen typischen PKW-Neureifen hat sich eine Auslegung der Bildaufnahmeeinrichtung 18 mit einem effektiven Öffnungswinkel von φ = ± 20° unter Berücksichtigung der auftretenden Abschattung als gut geeignet erwiesen.

In einer Ausführungsform weist die Vorrichtung wenigstens einen zusätzlichen Sensor auf, der ausgebildet ist, um die Annäherung eines Reifens und/oder die Beleuchtung des Reifenprofils zu detektieren. Ein solcher zusätzlicher Sensor ermöglicht es, die Vorrichtung bei der Annäherung eines Fahrzeugs rechtzeitig in den Messzustand zu versetzen. Bei einem bekannten Abstand des zusätzlichen Sensors von der Messvorrichtung kann darüber hinaus die Annäherungsgeschwindigkeit des Fahrzeugs bestimmt werden. Auf diese Weise kann zuverlässig festgestellt werden, ob eine mögliche Fehlmessung ggf. auf eine zu hohe Fahrgeschwindigkeit des Fahrzeugs zurückzuführen ist.

In einer Ausführungsform umfasst ein erfindungsgemäßes Verfahren, die Geschwindigkeit des Reifens zu bestimmen und das Verfahren abzubrechen, wenn eine zulässige Maximalgeschwindigkeit überschritten wird. Auf diese Weise können Fehlmessungen, die sich aus einer zu hohen Geschwindigkeit des Fahrzeugs ergeben, zuverlässig vermieden werden.

In einer Ausführungsform umfasst ein erfindungsgemäßes Verfahren zusätzlich, die ermittelte Profiltiefe mit einem vorgegebenen Grenzwert zu vergleichen und eine Warnung auszugeben, wenn die bestimmte Profiltiefe den vorgegebenen ersten Grenzwert unterschreitet. Auf diese Weise wird der Fahrer des Fahrzeugs zuverlässig gewarnt, wenn die Profiltiefe wenigstens eines Reifens die minimal zulässige Mindestprofiltiefe (erster Grenzwert) unterschreitet.

In einer Ausführungsform umfasst ein erfindungsgemäßes Verfahren auch, die Profiltiefen der Reifen einer Achse miteinander zu vergleichen und eine Warnung auszugeben, wenn die Differenz zwischen den Profiltiefen der Reifen einer Achse einen vorgegebenen zweiten Grenzwert unterschreitet. Auf diese Weise wird der Fahrer des Fahrzeugs zuverlässig auf mögliche Fahrwerksprobleme hingewiesen, die zu einer unterschiedlichen Abnutzung der Reifen führen.

In einer Ausführungsform umfasst ein erfindungsgemäßes Verfahren zusätzlich, Abbildungsparameter, die insbesondere die Beleuchtungsstärke der Beleuchtungseinrichtung und/oder die Integrationszeit der Bildaufnahmeeinrichtung umfassen, zu optimieren. Auf diese Weise wird erreicht, dass das Verfahren stets mit nahezu optimalen Abbildungsparametern durchgeführt wird, um eine möglichst hohe Qualität der Abbildung und in der Folge eine hohe Messgenauigkeit zu erreichen.

Zusammenfassend weist die vorliegende Erfindung in den beschriebenen Ausführungsformen u. a. die folgenden Vorteile auf:

Durch den Einsatz mehrerer Messmodule auf jeder Fahrzeugseite, wird eine optimale Abbildungsgeometrie quer zur Laufrichtung des Reifens auch für große Messbreiten, z.B. PKW Spurweiten von 1200 mm bis 1800 mm, LKW Spurweiten von 1600 mm bis 2100 mm bis hin zu Transportern und LKW mit Doppelbereifung, gewährleistet, so dass das Verfahren und die Vorrichtung für PKW aller Art, aber auch für LKW, Busse und für mehrachsige Fahrzeuge einsetzbar sind.

Der vorgeschlagene modulare Aufbau ermöglicht eine einfache Bereitstellung von Messsystemen mit an den jeweiligen Bedarf angepassten lückenlosen Messbreiten beliebiger Größe.

Die Erfindung stellt eine robuste Lösung zur Verfügung, die auch rauen Prüfbedingungen gewachsen ist. Die Vorrichtung weist keine bewegten Teile auf und vermeidet dadurch den Verschleiß an bewegten Teilen.

Durch den vorgeschlagenen Einbau in die Fahrbahn, auf der Fahrbahn oder in eine Überfahrschwelle kann eine erfindungsgemäße Vorrichtung einfach an einer Vielzahl von Stellen, insb. auch in Einfahrten, z.B. von Werkstätten, Tankstellen, Drive-In, Drive-Thru, Parkplätzen, eingesetzt werden.

Durch die Messung am rollenden Fahrzeug (Rad) wird eine für den Betreiber der Messstelle und für den Fahrer komfortable Lösung bereitgestellt.

Die Messung findet von unten statt, wodurch potentiell störende Lichteinflüsse der Umwelt minimiert werden. Schwankendes Umgebungslicht (Tag, Nacht, Sonne, Wolken, ...) wird durch eine optimierte Beleuchtung kompensiert. Durch Anpassung der Beleuchtungsintensität und Integrationszeit werden Unter- und Überbelichtungen vermieden. Durch die Anordnung der Bildaufnahmeeinrichtung und auch der Beleuchtungseinrichtung in einem größeren Winkel zur Orthogonalen der Reifenoberfläche werden störende Reflexionen, welche die Messergebnisse verfälschen könnten, zuverlässig vermieden.

Durch die Messung in der Reifenaufstandsfläche von unten durch einen Schlitz der Vorrichtung, werden Messfehler durch Profildeformation in der belasteten Aufstandsfläche vermieden.

Zusätzliche Korrekturverfahren aufgrund unterschiedlicher Messwinkel zur Orthogonalen der Reifenoberfläche bei unterschiedlichen Reifendurchmessern, sind nicht erforderlich.

Die Messung erfolgt quasi an einem statisch ruhenden Rad, dadurch werden Messfehler durch Bewegungsunschärfe vermieden.

Es wird eine hohe Messgenauigkeit erreicht. Durch die Generierung einer großen Anzahl an Lichtlinien, die auf die Reifenoberfläche projiziert werden, wird eine hohe Abtastdichte erreicht, die eine sichere Erkennung von in das Profil integrierten Abriebindikatoren und von Objekten (z.B. verklemmte Steinchen) in den Profilrillen des Reifens, die das Messergebnis verfälschen könnten, ermöglicht. Durch eine Kodierung der Lichtlinien können die Bilder der reflektierten Lichtlinien auch bei kleinen Abständen zwischen den Lichtlinien zuverlässig zugeordnet und ausgewertet werden.

Die Visualisierung des Prüfergebnisses in Form einer Ampel und zusätzlich einer verbalen Handlungsempfehlung für den Fahrer erleichtert die Bedienbarkeit und vermeidet Fehler bei der Beurteilung der Messergebnisse.

Ausführungsbeispiele der Erfindung werden im Folgenden anhand der beigefügten Figuren näher erläutert.

Kurze Beschreibung der Figuren:

Figur 1 veranschaulicht in einer schematischen Darstellung das hier verwendete Messprinzip zur Profiltiefenmessung.

Figur 2 zeigt eine schematische, perspektivische Ansicht eines Messplatzes zur Profiltiefenmessung.

Figur 3 zeigt eine Anordnung zur Messung der Profiltiefe in einer schematischen Seitenansicht.

Figur 4a zeigt einen Schnitt senkrecht zur Ebene der Fahrbahn durch das Zentrum des Reifens orthogonal zur Fahrtrichtung des Fahrzeugs.

Figur 4b zeigt einen vergrößerten Ausschnitt aus Figur 4a.

Figur 5 zeigt einen Ausschnitt eines Reifens mit einer Profilrille und die geometrischen Zusammenhänge der Abschattung.

Figur 6 zeigt einen Schnitt durch eine Vorrichtung zur Profiltiefenmessung mit vier Bildaufnahmeeinrichtungen.

Figuren 7a und 7b veranschaulichen eine verbesserte Ausnutzung eines Flächenbildsensors durch eine verzerrte optische Abbildung.

Figuren 8a und 8b veranschaulichen eine verbesserte Ausnutzung eines Flächenbildsensors durch eine alternative verzerrte optische Abbildung.

Figur 9 ist ein Graph, der den Anteil der Fehlmessungen als Funktion der Anzahl der projizierten Lichtlinien zeigt.

Figur 10 veranschaulicht eine Messung mit Lichtlinien, deren Abstände zu den jeweils benachbarten Linien variieren.

Figur 11 zeigt eine schematische Ansicht einer Vorrichtung zur Messung der Profiltiefe in oder auf einer Fahrbahn quer zur Fahrtrichtung eines Kraftfahrzeuges.

Figur 12 zeigt eine seitliche Schnittansicht einer in einer Überfahrrinne angeordneten Vorrichtung zur Messung der Profiltiefe.

Figur 13 zeigt eine Messvorrichtung mit vier in einer Überfahrrinne nebeneinander angeordneten identischen Messmodulen mit einem gemeinsamen Schlitz in der Aufsicht.

Figur 14 zeigt eine Messvorrichtung mit vier in einer Überfahrrinne nebeneinander angeordneten Messmodulen, die jeweils um 180° gedreht zueinander angeordnet sind, in der Aufsicht.

Figurenbeschreibung

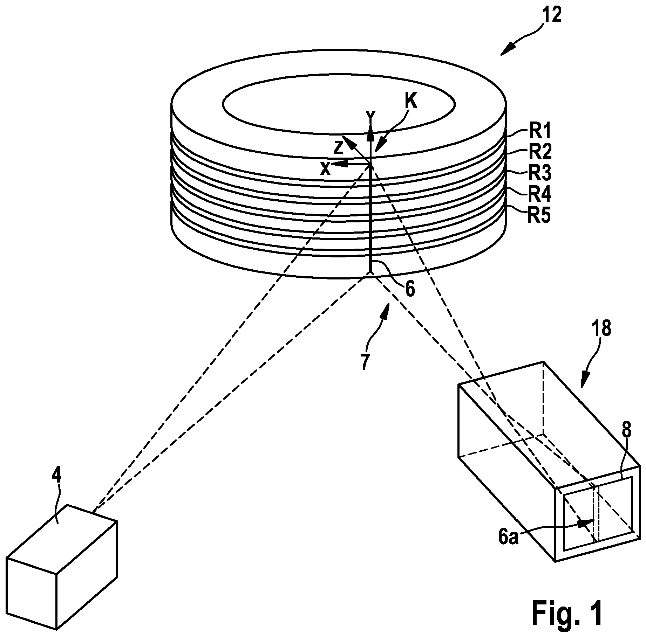

Figur 1 veranschaulicht in einer schematischen Darstellung das Messprinzip zur Profiltiefenmessung mit Hilfe des Lichtschnitt-Triangulationsverfahrens an einem Reifen 12 mit einer vereinfachten Darstellung des Profils des Reifens 12 mit fünf Längsrillen R1, R2, R3, R4, R5.

Ein Objektkoordinatensystem K ist so ausgerichtet, dass die Tiefenausdehnung des Profils parallel zur Z-Achse des Objektkoordinatensystems K ausgerichtet ist.

Eine Beleuchtungseinrichtung 4 projiziert mindestens eine Lichtlinie 6 auf die mit einem Profil ausgebildete Lauffläche des Reifens 12. Eine Bildaufnahmeeinrichtung 18 ist mit einem in der Figur 1 nicht gezeigten Objektiv und mit einem Flächenbildsensor 8 (z.B. einem CCD- oder CMOS-Bildsensor) ausgestattet. Durch die unterschiedlichen Perspektive zwischen der Beleuchtungseinrichtung 4 und der Bildaufnahmeeinrichtung 18 und den Tiefenunterschied zwischen der Reifenlauffläche und dem Rillengrund wird die auf das Profil projizierte Lichtlinie 6 auf dem Flächenbildsensor 8 der Bildaufnahmeeinrichtung 18 in Form von gegeneinander versetzten Linienabschnitten 6a abgebildet.

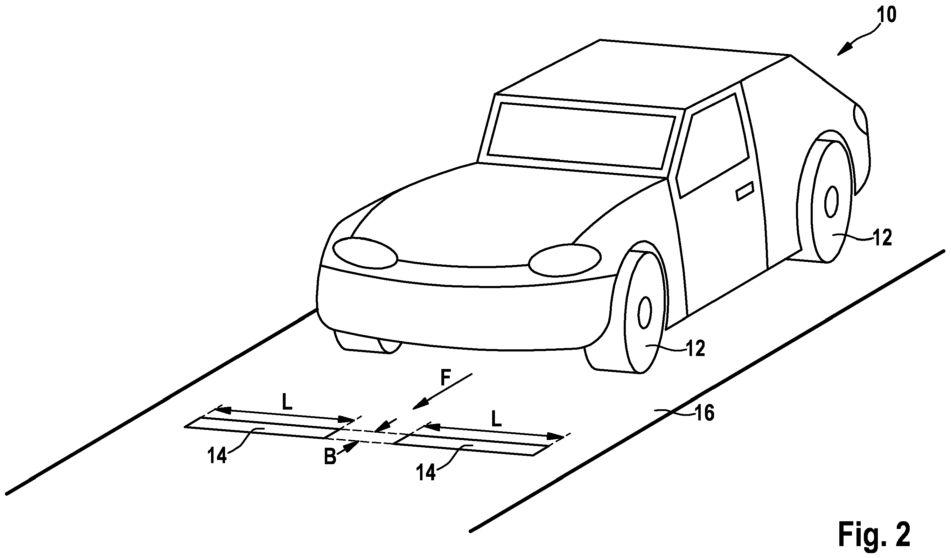

Figur 2 zeigt einen Messplatz mit einer Fahrbahn 16, in der zwei Schlitze 14 in der Spur eines sich in Fahrtrichtung F nähernden Fahrzeugs 10 ausgebildet sind. Die Messung findet statt, während das Fahrzeug 10 mit seinen Rädern bzw. Reifen 12 über wenigstens einen der länglichen Schlitze 14 fährt, die in der Fahrbahn 16 ausgebildet und in ihrer Längsausdehnung quer zur Laufrichtung der Reifen 12 des Kraftfahrzeugs 10 ausgerichtet sind.

Die Schlitze 14 haben quer zur Fahrtrichtung F des Fahrzeugs 10 eine Ausdehnung (Länge) L, die mindestens der Breite der maximalen Aufstandsfläche der zu vermessenden Reifen 12 entspricht. Zusätzlich ist jedoch die Varianz der Spurweiten der zu vermessenden Fahrzeuge 10 zu berücksichtigen, um eine automatische Vermessung einer möglichst großen Zahl unterschiedlicher Fahrzeugtypen zu ermöglichen. Wenn die Messvorrichtung auch für Nutzfahrzeuge geeignet sein soll, ist insbesondere auch die Varianz der Spurweiten und Reifenbreiten von Transportern und LKW mit oder ohne Doppelbereifung zu berücksichtigen.

Die Breite B der Schlitze 14 parallel zur Fahrtrichtung F ist zum einen deutlich kleiner zu wählen als die kleinste Aufstandsfläche typischer Reifen 12, zum anderen ist die Breite B der Schlitze 14 auch so zu wählen, dass durch die Überfahrt der Fahrkomfort nicht unangenehm beeinträchtigt wird.

Die Schlitze 14 ermöglichen es, die Messung der Profiltiefe in einem unbelasteten Teilbereich der Lauffläche des zu prüfenden Reifens 12 durchzuführen. Dies hat den Vorteil, dass Messfehler, die aufgrund der durch die Radlast des Fahrzeugs 10 zwangsläufig hervorgerufenen Quetschung des Reifenmaterials in der Aufstandsfläche des Reifens 12 entstehen würden, vermieden werden.

Darüber hinaus entspricht eine Messung im Bereich der Aufstandsfläche des Reifens 12 quasi einer Messung in Ruhelage, denn jeder Punkt der Lauffläche des Reifens 12 bewegt sich während des Abrollens auf der Fahrbahn 16 entlang einer Zykloiden mit der physikalischen Eigenschaft, dass seine Geschwindigkeit im Aufstandspunkt Null ist. Das hat den Vorteil, dass keine zusätzliche Messunsicherheit durch Bewegungsunschärfe vorhanden ist.

Ein weiterer Vorteil der Messung des aufstehenden Reifenprofils von unten durch einen Schlitz 14 besteht darin, dass durch die Karosserie des Fahrzeugs 10 und den Reifen 12 selbst das Umgebungslicht zu einem großen Teil abgeschattet wird und die Messung dadurch weitgehend unabhängig von wechselnden Umgebungsbedingungen (wie z.B. Tag, Nacht, Sonne, Wolken, ...) ist.

Für die Vermessung von PKW mit Spurweiten zwischen 1200 mm und 1800 mm in den Einfahrten von Werkstätten, Tankstellen oder Parkplätzen u.ä. unter Annahme einer maximalen Geschwindigkeit von 15 km/h hat sich zum Beispiel auf jeder Fahrzeugseite ein Schlitz 14 mit einer Länge L zwischen 500 mm und 700 mm und einer Breite B zwischen 30 mm und 50 mm als gut geeignet erwiesen. In der folgenden Beschreibung wird beispielhaft eine Schlitzlänge von L = 700 mm und eine Schlitzbreite von B = 50 mm angenommen.

Die Beleuchtungseinrichtung 4 und die Bildaufnahmeeinrichtung 18 sind so angeordnet, dass der Messbereich der Bildaufnahmeeinrichtung dem Schlitz 14 in der Fahrbahn 16 entspricht. Das Messprinzip verlangt eine feste, unveränderliche Zuordnung zwischen dem Objekt (Reifen 12), der Beleuchtungseinrichtung 4 und der Bildaufnahmeeinrichtung 18. Durch die Vermessung des unbelasteten Teilbereichs der Reifenaufstandsfläche durch den Schlitz 14 in der Fahrbahn 16 ist gewährleistet, dass die Tiefenausdehnung des Reifenprofils, oder anders gesprochen, der Normalenvektor n des Reifens 12, für jeden Reifen 12 zum Zeitpunkt der Messung eine identische Ausrichtung aufweist. In dieser Anordnung ist das Messsystem auch zu kalibrieren.

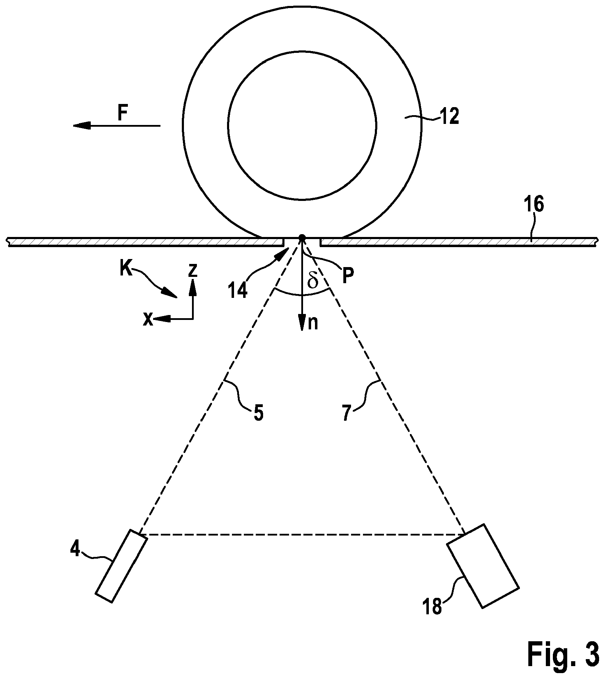

Figur 3 zeigt eine Anordnung zur Messung der Profiltiefe in einer schematischen Seitenansicht. Der Winkel δ bezeichnet den Winkel zwischen der Ebene 5, in der das Licht von der Beleuchtungseinrichtung 4 auf das Reifenprofil projiziert wird, und der Abbildungsebene 7 am Objektpunkt P.

Die Genauigkeit des Lichtschnitt-Triangulationsverfahrens hängt von der Abbildungsgeometrie (Abbildungsmaßstab, Schnittwinkel der Raumstrahlen) und der als Punktmessgenauigkeit spx bezeichneten Güte der Linienpunktbestimmung ab. Die Punktmessgenauigkeit spx ist nicht nur abhängig von dem zur Detektion der Lichtlinie 6 eingesetzten Bildmessalgorithmus, sondern beinhaltet auch Messunsicherheiten, die durch die Oberflächentextur, Reflexionen oder Speckle-Effekte der Beleuchtung hervorgerufen werden. Unter optimalen Bedingungen und wenn sich die Breite der abgebildeten Lichtlinie 6 auf dem Flächenbildsensor 8 über mehrere Pixel erstreckt, kann durch Interpolation eine Subpixel-Punktmessgenauigkeit spx von 1/3 Pixel erreicht werden. Formel (1) ermöglicht eine Abschätzung der Tiefenmessgenauigkeit dZ eines optischen 3D-Triangulationssystems.

$$dZ = \frac{spx \times mb \times ps}{\tan(\delta)} \qquad (1)$$

dabei ist

mb: Abbildungsmaßstab zwischen Objektraum und Bildraum
ps: Größe eines Sensorpixels in mm
δ: Schnittwinkel zwischen der Lichtebene 5 und dem Abbildungsstrahl 7 am Objektpunkt P.

Aus der Formel (1) ist ersichtlich, dass die Messgenauigkeit mit zunehmendem Winkel δ steigt. Aus praktischen Gründen, wie z.B. Beschränkungen des zur Verfügung stehenden Bauraums und der Gefahr, dass bei einem zu großen Winkel δ bei nicht ebenen Objekten Bereiche abgeschattet werden können, wie im Folgenden diskutiert wird, wird die Anordnung meist auf einen Winkel δ zwischen 20° und 45°, insbesondere 40° ausgelegt.

Die in der Figur 3 gezeigte Anordnung der Beleuchtungseinrichtung 4 und der Bildaufnahmeeinrichtung 18 hat zusätzlich den Vorteil, dass die Einrichtungen 4, 18 gut vor ggf. durch den Schlitz 14 herabfallenden Schmutz geschützt sind.

Die Beleuchtungseinrichtung 4 wird so ausgerichtet, dass die Lichtlinien 6 parallel oder nahezu parallel zur Längsseite des Schlitzes 14 quer zur Fahrtrichtung F des Fahrzeugs 10 bzw. zur Laufrichtung des Reifens 12 auf dessen Lauffläche projiziert werden.

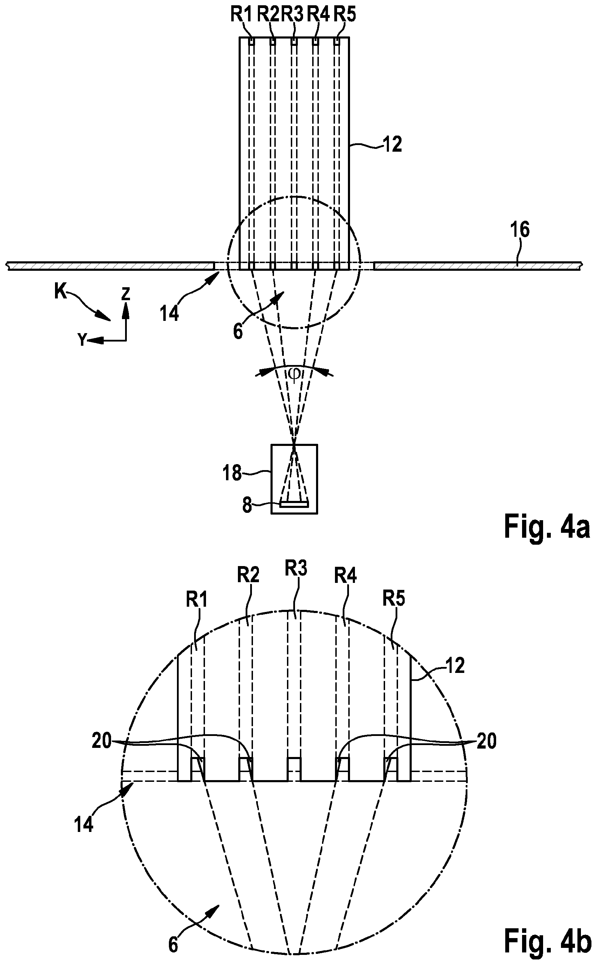

Figur 4a zeigt einen Schnitt senkrecht zur Ebene der Fahrbahn 16 durch die Mitte des Reifens 12 orthogonal zur Fahrtrichtung F des Fahrzeugs 10. Das Profil des Reifens 12 ist beispielhaft in vereinfachter Form mit fünf Längsrillen R1, R2, R3, R4, R5 dargestellt. Eine von der (in Figur 4a nicht dargestellten) Beleuchtungseinrichtung 4 auf das Profil des Reifens 12 projizierte Lichtlinie 6 wird von dem Flächenbildsensor 8 der Bildaufnahmeeinrichtung 18 aufgenommen.

Die vergrößerte Darstellung des Reifenprofils in der Figur 4b verdeutlicht, dass, abhängig von der Breite und Tiefe der Rillen R1, R2, R3, R4, R5, bei der Projektion der Lichtlinien 6 mit zunehmendem Öffnungswinkel φ der Bildaufnahmeeinrichtung 18 Abschattungen 20 auftreten, die ab einem bestimmten Öffnungswinkel φ eine Profiltiefenmessung unmöglich machen, da der Grund der Rillen R1, R2, R3, R4, R5 nicht oder nur noch unzureichend beleuchtet wird.

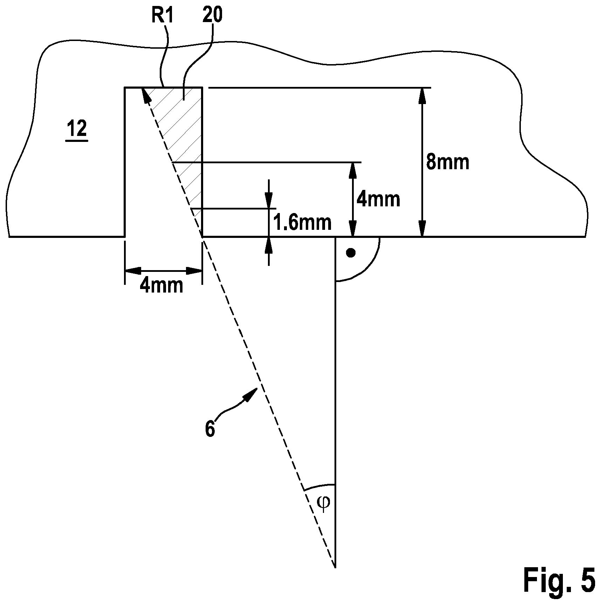

Figur 5 zeigt einen Ausschnitt eines Reifens 12 mit einer Profilrille R1 und die geometrischen Zusammenhänge der Abschattung 20.

Eine tabellarische Übersicht über die resultierenden Abschattungen 20 in Prozent der Rillenbreite als Funktion der Rillenbreite, der Profiltiefe und des Öffnungswinkels φ zeigt, dass die Abschattung 20 bei einer Rillentiefe von 8 mm auf maximal 27% begrenzt ist.

| Rille | φ [°] | Rillentiefe [mm] | | |
|---|---|---|---|---|
| | | 1,6 | 4,0 | 8,0 |
| R1 | +20 | 85% | 64% | 27% |
| R2 | +10 | 93% | 82% | 65% |
| R3 | 0 | 100% | 100% | 100% |
| R4 | -10 | 93% | 82% | 65% |
| R5 | -20 | 85% | 64% | 27% |

Unter der Annahme einer Rillenbreite von 4 mm und einer Rillentiefe von 8 mm eines typischen PKW-Neureifens hat sich eine Auslegung des Messsystems mit einem effektiven Öffnungswinkel von φ = ± 20° als gut geeignet erwiesen.

Die Vermessung der betroffenen Profilrillen R1, R2, R3, R4, R5 wird durch die Abschattung 20 zwar eingeschränkt, kann aber durch zusätzliche Randbedingungen wieder verbessert werden:
Zum einen wird das Ausmaß der Abschattung 20 umso geringer, je geringer die Profiltiefe ist, d.h. je weiter das Profil abgefahren ist. Dadurch erhöht sich die Messgenauigkeit je mehr sich die Profiltiefe dem kritischen Warnwert der gesetzlich vorgegebenen Mindesttiefe nähert oder diesen unterschreitet.

Des Weiteren kann die Messgenauigkeit auch durch eine Erhöhung der Anzahl der auf das Profil projizierten Lichtlinien 6 gesteigert werden. Anstatt einen kompletten Rillengrund mit einer einzigen Lichtlinie 6 zu vermessen, können vier Lichtlinien 6 mit nur 25% messbarem Rillengrund theoretisch dasselbe Messergebnis für diese Rille erbringen. Aufgrund von zu erwartenden fehlerbehafteten Messungen ist eine deutlich größeren Anzahl von Lichtlinien 6 vorteilhaft, wie im Folgenden ausgeführt werden wird.

Typische PKW-Reifenprofile weisen in der Regel Längsrillen und schräg dazu verlaufende Nebenrillen auf, die systematisch wiederkehrende Blöcke mit einer Größe von 4 mm bis 8 mm bilden. Um Strukturen dieser Größenordnung im Bild der Bildaufnahmeeinrichtung 18 sicher detektieren zu können, wird eine Abbildung mit einer Auflösung von mindestens 2-3 Pixel/mm gewählt. Die Abbildung eines Messbereichs von 700 mm, definiert durch die Schlitzlänge L, erfordert bei 3 Pixel/mm demnach einen Flächenbildsensor 8 mit einer Auflösung von 2100 Pixeln zumindest in einer Richtung der Bildaufnahmefläche des Flächenbildsensors 8.

Auf dem Markt sind entsprechende Flächenbildsensoren 8 verfügbar. Die am Markt kostengünstig verfügbaren Flächenbildsensoren 8 haben jedoch den Nachteil, dass sie entweder relativ teuer sind oder Bilder nur mit niedrigen Aufnahmefrequenzen aufnehmen können. Ein typischer PKW-Reifen 12 hat einen Umfang von etwa 2000 mm und eine Latschlänge (Länge der Reifenaufstandsfläche) von etwa 100 mm. Bei einer Auslegung des Messsystems auf eine Überfahrgeschwindigkeit von maximal 15 km/h ist das Reifenprofil für die Bildaufnahmeeinrichtung 18 durch den Schlitz 14 für etwa 0,025 Sekunden sichtbar, so dass die Bildaufnahmeeinrichtung 18 auf eine Frequenz von mindestens 40 Bildern pro Sekunde ausgelegt sein muss.

Erschwerend für den vorgesehenen Einsatz marktüblicher Flächenbildsensoren 8 für eine Profiltiefenmessung durch einen Schlitz 14 von unten kommt hinzu, dass zur Einhaltung des maximalen Öffnungswinkels φ von ± 20° mit Flächenbildsensoren 8 hoher Auflösung ein Abstand D zwischen dem Reifenprofil und dem Flächenbildsensor 8 (Aufnahmeabstand) von etwa 1 Meter erforderlich ist. Ein derartiger Aufnahmeabstand erfordert einen Bauraum entsprechender Größe oder andere konstruktive Maßnahmen.

Alternativ zu einem großen Bauraum kann daher vorgesehen werden, mehrere relativ preiswerte Bildaufnahmeeinrichtungen 18, deren Flächenbildsensoren 8 zwar eine geringere Auflösung aber eine ausreichend hohe Aufnahmefrequenz haben, in Längsrichtung L des Schlitzes 14 quer zur Fahrtrichtung F des Fahrzeugs 10 nebeneinander anzuordnen.

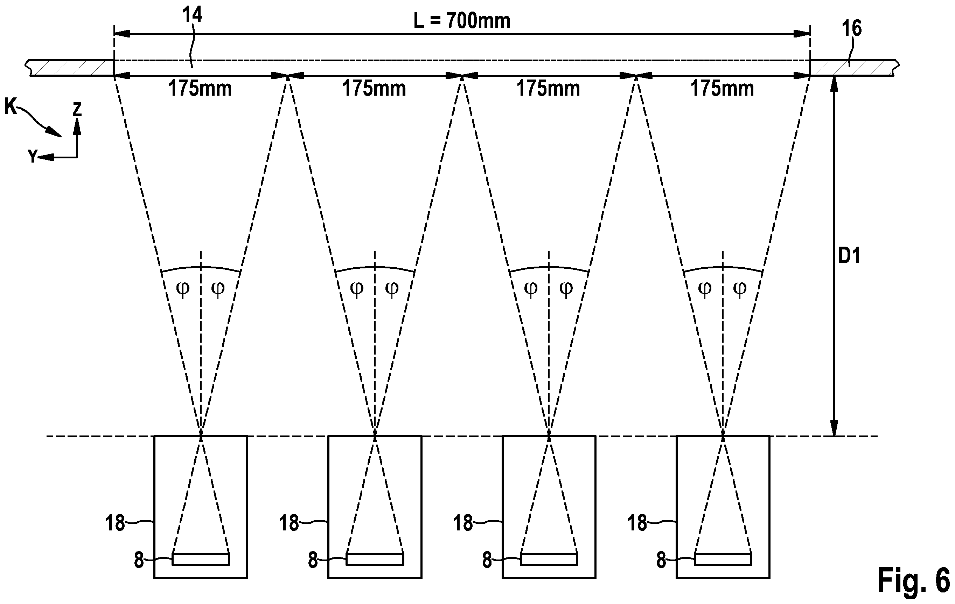

Figur 6 zeigt beispielhaft eine derartige Anordnung, mit vier Bildaufnahmeeinrichtungen 18, die jeweils mit einem am Massenmarkt verfügbaren Flächenbildsensor 8 mit einem Sensorformat von 640 Pixel x 480 Pixel der Größe 7,5 μm x 7,5 μm, der standardmäßig Bilder mit einer Aufnahmefrequenz von bis zu 60 Bildern pro Sekunde aufnehmen kann, ausgestattet sind. Der Aufnahmeabstand D1 verringert sich bei einer solchen Anordnung auf etwa 240 mm und es ergibt sich ein Abbildungsmaßstab von mb ~ 36.

Mit der aus der optischen 3D-Messtechnik bekannten Formel (1) lässt sich die zu erwartende Tiefenmessgenauigkeit für die Profilmesseinrichtung wie folgt abschätzen:

$$dZ = \frac{spx \times mb \times ps}{\tan(\delta)} = \frac{0.3\,pixel \times 36 \times 0.0075\,mm\,/\,pixel}{\tan(40°)} = 0.1mm \qquad (2)$$

Diese Abschätzung zeigt, dass mit einer Vorrichtung, wie sie in der Figur 6 gezeigt ist, die für ein entsprechendes Messsystem vorgesehene Messgenauigkeit von ± 0.2 mm erreicht werden kann, auch wenn sich die Subpixelmessgenauigkeit spx aufgrund von Störeffekten verschlechtern würde.

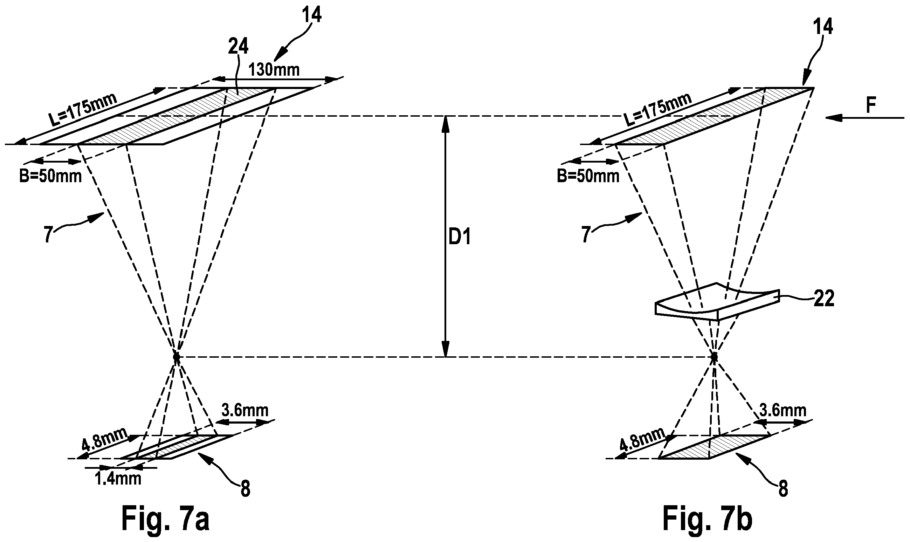

Aus dem Format der Flächenbildsensoren 8, dem Öffnungswinkel φ = ± 20° und der Aufnahmeentfernung D1 = 240 mm ergibt sich ein rechteckiges Objektfenster 24 der Größe 175 mm x 130 mm. Da die Breite B des Schlitzes 14 nur 50 mm beträgt, werden, wie in der Figur 7a erkennbar, nahezu zwei Drittel der verfügbaren Bildaufnahmefläche des Flächenbildsensors 8 nicht genutzt.

Diesem Nachteil kann durch eine zusätzliche, lineare Optik 22, wie z.B. einer Zylinderlinse 22, die im Strahlengang 7, zwischen dem Flächenbildsensor 8 und dem Schlitz 14 angeordnet ist und die nur in einer Raumrichtung Brechkraft besitzt, abgeholfen werden.

Figur 7b zeigt eine solche Zylinderlinse 22 im Strahlengang 7 der Bildaufnahmeeinrichtung 18, die den Sichtbereich des Flächenbildsensors 8 in Fahrtrichtung F komprimiert und dadurch eine vorteilhafte Steigerung der Auflösung in Richtung der Breite B des Schlitzes 14 auf etwa 10 Pixel/mm bewirkt.

Ein alternatives Konzept sieht vor, das nicht quadratische Bildformat des Flächenbildsensors 8 der Bildaufnahmeeinrichtung 18 durch eine Drehung um 90° mit seiner höheren Auflösung von 640 Pixel für die Messung der kleineren Objektfensterbreite B zu verwenden. Dadurch nimmt die Auflösung in Richtung der Breite B des Schlitzes 14 auf etwa 13 Pixel/mm zu.

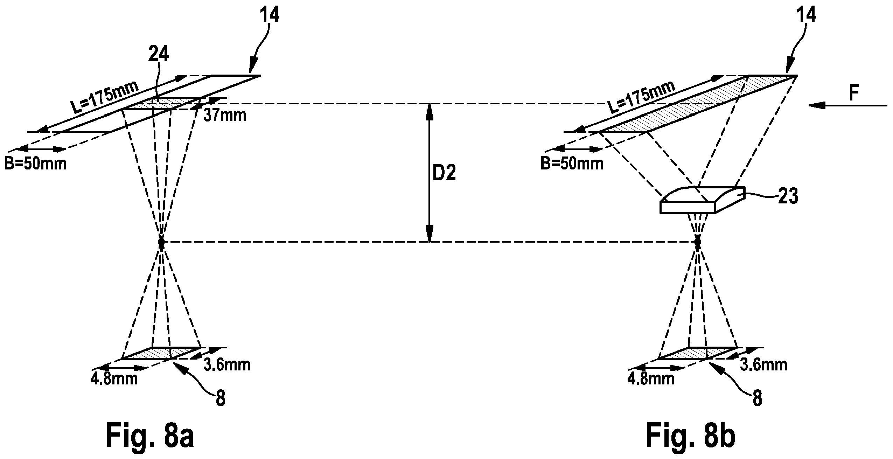

Ein weiteres Konzept sieht vor, den Aufnahmeabstand D1 zum Beispiel auf einen Aufnahmeabstand D2 < D1 zu verringern, so dass das Objektfenster 24 nur noch etwa 50 mm x 37 mm beträgt und die 50 mm der Breite B des Objektfensters 24 auf die 640 Pixel des Flächenbildsensors 8 abgebildet werden, wie in der Figur 8a gezeigt.

Auf diese Weise wird eine noch höhere Auflösung für die Tiefenmessgenauigkeit und eine deutlich höhere Messgenauigkeit erreicht, die sich gemäß Formel (2) durch einen verringerten Abbildungsmaßstab abschätzen lässt. Die dabei reduzierte Größe des Objektfensters 24 in der Richtung quer zur Fahrtrichtung F kann, wie in der Figur 8b gezeigt, durch eine das Bild quer zur Fahrtrichtung F aufweitende Zylinderlinse 23 kompensiert werden.

Ein weiterer Vorteil der in der Figur 8b gezeigten Anordnung besteht darin, dass typische Verzeichnungsfehler und Abschattungen der Zylinderlinse 23 im Wesentlichen in der für die Bestimmung der Profiltiefe weniger relevanten Richtung quer zur Fahrtrichtung F auftreten.

Auch eine Kombination aus einer Komprimierung des Bildes in einer Richtung parallel zur Fahrtrichtung F gemäß Figur 7b und einer Aufweitung des Bildes in der Richtung quer zur Fahrtrichtung F gemäß Figur 8b ist möglich, um den Abbildungsmaßstab und die Auflösung sowohl parallel als auch quer zur Fahrtrichtung F zu optimieren.

In einem in den Figuren nicht gezeigten Ausführungsbeispiel wird die normale Abbildungsoptik der Bildaufnahmeeinrichtung 18 mit der linearen Optik 22, 23 zu einem gemeinsamen optischen System zusammengefasst, das in den Richtungen parallel und quer zur Fahrtrichtung F eine unterschiedliche Brechkraft aufweist. Da die Aufnahmeeinrichtung 18 in diesem Fall mit nur einem einzigen Objektiv versehen wird, das die Eigenschaften der Bildaufnahmeeinrichtung 18 und der linearen Optik 22, 23 miteinander vereint, vereinfacht sich die Konstruktion der Bildaufnahmeeinrichtung 18.

Die Genauigkeit und die Robustheit der Profiltiefenmessung können durch eine Erhöhung der Anzahl der auf das Profil projizierten Lichtlinien 6 weiter gesteigert werden.

In den Profilgrund der Reifenlauffläche sind gemäß einer gesetzlichen Richtlinie sogenannte Abriebindikatoren integriert, die sich gegenüber dem Rillengrund um den Betrag der gesetzlich vorgeschriebenen minimalen Profiltiefe erheben. Durch diese Erhebungen sowie durch andere Störobjekte wie Schmutz oder verklemmte Steinchen kann die Messung verfälscht werden, wenn die fehlerhaften Messungen nicht robust als Ausreißer erkannt und eliminiert werden. Robuste Schätzer zur Effizienzsteigerung von Schätzverfahren, wie zum Beispiel der RANSAC-Algorithmus, sind aus der mathematischen Statistik bekannt. Aufgrund der zum Teil vorgeschriebenen Anordnung der Abriebindikatoren und ihrer typischen Ausdehnung von etwa 6 mm bis 10 mm in Laufrichtung können die Messwerte im vorgesehen Messfenster mit einer Schlitzbreite von 50 mm einen theoretischen Ausreißeranteil von 20% aufweisen. Abhängig von der im gewissen Umfang vom Reifenhersteller frei wählbaren Anordnung der Abriebindikatoren und der zufälligen Position der Abriebindikatoren im Bereich des Schlitzes 14 zum Zeitpunkt der Messung, kann bei nur wenigen Linien der Ausreißeranteil jedoch im günstigen Fall einen Wert von 0% und im ungünstigen Fall einen Wert von 100% einnehmen, so dass eine Erkennung, ob Ausreißer vorliegen bzw. welche Messwerte als Ausreißer zu werten sind, gar nicht bzw. nur mit großer Unsicherheit möglich ist.

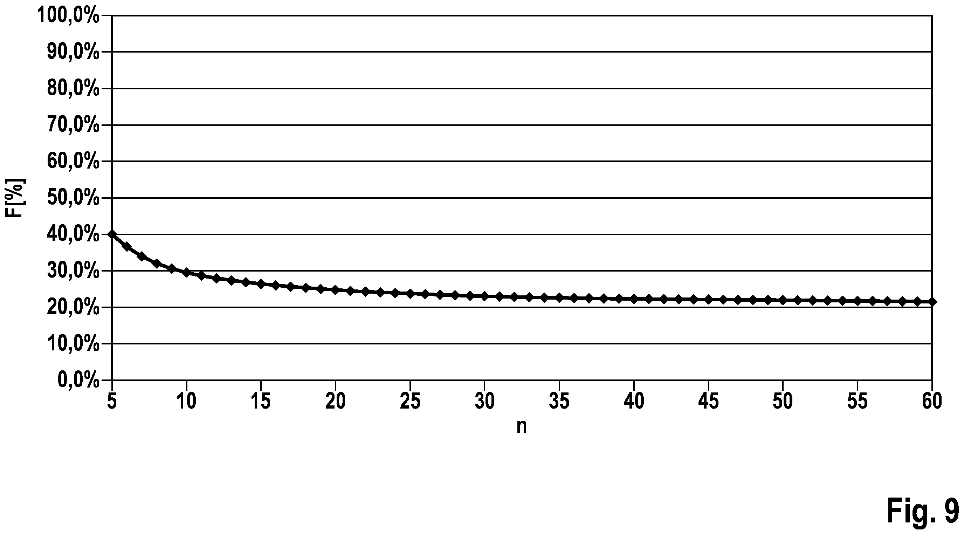

In der Figur 9 ist auf der y-Achse der Anteil der Fehlmessungen (in Prozent) als Funktion der auf der x-Achse aufgetragenen Anzahl n der Lichtlinien 6 aufgetragen. Mit einer steigenden Anzahl n an Lichtlinien 6 nähert sich die Anzahl der Ausreißer im ungünstigen Fall dem theoretischen Ausreißeranteil (hier 20%) asymptotisch an.

Der Erfolg des Ausreißertests ist auch abhängig von einem vorzugebenden Grenzwert, bis zu welcher Grenze ein Messwert nicht als Ausreißer gilt. Je kleiner der Grenzwert gewählt werden kann, desto zuverlässiger können die Ausreißer detektiert werden, einhergehend mit weniger Rechenaufwand, je genauer der theoretische Ausreißeranteil a priori bekannt ist.

Praktische Messungen haben ergeben, dass mindestens dreißig Lichtlinien 6 empfehlenswert sind, um eine absolute Messgenauigkeit von $\leq \pm 0.2$ mm bei einer Robustheit von $\geq 98\%$ zu gewährleisten.

Bei einer hohen Anzahl n von Lichtlinien 6 geht die lokale, linienweise Abtastung in eine flächenhafte Abtastung über, die zusätzliche Möglichkeiten zur Messung und Bewertung des Reifenprofils eröffnet. Ein weiterer Vorteil einer hohen Abtastdichte ist, dass die Abriebindikatoren sicher als solche detektiert und gemessen werden können, weil dadurch die relative Messgenauigkeit und Zuverlässigkeit der Ergebnisse verbessert wird. Hilfreich ist dazu die Kenntnis, dass die Abriebindikatoren für die meisten Reifenprofile in Laufrichtung etwa 10 mm Ausdehnung aufweisen, die bei einer hohen Anzahl von Linien 6 einfacher segmentiert werden können. Weiterhin besteht auch die Möglichkeit, Hinweise auf Schäden wie Auswaschungen oder Sägezahnbildung im Profil geben zu können oder die einseitige Abnutzung des Profils als Folge eines fehlerhaften Radsturzes zu erkennen. Darüber hinaus kann die hohe Abtastdichte dazu verwendet werden, um anhand der unterschiedlichen Profilstrukturen zu unterscheiden, ob es sich um einen Sommer-, Winter- oder Alljahresreifen handelt.

Die Breite einer Lichtlinie 6 im Bild auf dem Flächenbildsensor 8 ist abhängig von der Qualität der abbildenden Optiken der Beleuchtungseinrichtung 4 und der Bildaufnahmeeinrichtung 18, von der Oberflächenrauhigkeit und von weiteren Effekten wie Streulicht und Speckle. Abbildungseffekte können deshalb durchaus toleriert werden, wenn sie systematisch zu einer Linienverbreiterung beitragen. Wie bereits erwähnt, ist die Breite einer abgebildeten Lichtlinie 6 entscheidend für die Linienpunktmessgenauigkeit. Aus der Anforderung einer optimalen Linienbreite von ca. fünf Pixel zur Linienpunktmessung im Subpixel-Bereich und unter Annahme eines minimalen Abstandes von einem Pixel zur Trennung der Lichtlinien 6 lässt sich herleiten, dass theoretisch maximal 106 Lichtlinien 6 möglich sind, wenn, wie im Beispiel beschrieben, auf dem Flächenbildsensor 8 640 Pixel zur Verfügung stehen.

Von der objektseitigen Betrachtung her ist die Generierung von Lichtlinien 6 mit einer Linienbreiten von 0,3 mm oder weniger technisch möglich, so dass unter Annahme eines Linienabstandes von beispielsweise 0,2 mm etwa einhundert Lichtlinien 6 in einen Schlitz 14 mit einer Breite B von 50 mm projiziert werden können.

Die geeignete Breite der projizierten Lichtlinien 6 ist deshalb abhängig von der Abbildungsgeometrie und systemimmanenter Abbildungsfehler und wird so festgelegt, dass durch alle Einflussfaktoren eine Linienbreite im Bild auf dem Flächenbildsensor 8 von etwa fünf Pixeln entsteht und mindestens dreißig Lichtlinien 6 abgebildet werden können.

Bei einer hohen Anzahl von Lichtlinien 6 und sich einem daraus ergebenden geringen Abstand zwischen den einzelnen Lichtlinien 6 ist, abhängig von der Tiefenausdehnung des Objekts und vom Winkel $\delta$ zwischen der Projekti-

onsrichtung der Beleuchtungseinrichtung 4 und der Aufnahmerichtung der Bildaufnahmeeinrichtung 18 am Objekt, eine eindeutige Zuordnung des Bildes einer Lichtlinie 6a auf dem Flächenbildsensor 8 zu einer projizierten Lichtlinie 6 nicht mehr ohne weiteres möglich.

Um eine eindeutige Zuordnung zu ermöglichen, muss die sich aus der Objekttiefe und der Aufnahmegeometrie ergebende Verschiebung des Lichtstrahls 5 im Bild geringer als der Abstand der abgebildeten Linien 6a im Bild sein. Aus der Formel (2) und den dort angegebenen Parametern zur Bildauflösung und Aufnahmekonfiguration lässt sich zum Beispiel ableiten, dass eine Tiefenänderung von etwa 1 mm einer Verschiebung des Lichtstrahles um etwa 3 Pixel auf dem Flächenbildsensor 8 entspricht. Wenn die Profiltiefe eines fabrikneuen Reifens 12 von 8 mm bis 9 mm zugrunde gelegt wird, ergibt sich im Bild für die Profiltiefe von 9 mm eine Verschiebung der Linienabschnitte des Rillengrundes gegenüber der Lauffläche um etwa 9 mm * 3 Pixel/mm = 27 Pixel.

Unter Berücksichtigung einer zusätzlichen, optimalen Linienbreite von ca. 5 Pixeln wird bei einer verfügbaren Auflösung von 640 Pixeln für Lichtlinien 6 mit einem konstanten Abstand voneinander die Grenze der eindeutigen Zuordnung bei maximal zwanzig Lichtlinien 6 erreicht. Bei einer darüber hinausgehenden Anzahl an Lichtlinien 6 wird die Unterscheidung zwischen den einzelnen Lichtlinien 6 zunehmend schwieriger und fehlerträchtig.

Eine Verringerung des Schnittwinkels $\delta$ vergrößert die mögliche Anzahl an Lichtlinien 6, bei denen die Eindeutigkeit der Zuordnung erhalten bleibt. Aus der Formel (2) ist jedoch ebenfalls ersichtlich, dass die Tiefenmessgenauigkeit bei einem kleineren Schnittwinkel $\delta$ abnimmt. Zum Erreichen der für die hier vorgesehene Profiltiefenmessung erforderlichen hohen Messgenauigkeit wird einem großen Schnittwinkel $\delta \sim 40°$ der Vorzug gegeben und für die eindeutige Zuordnung einer hohen Anzahl von Lichtlinien 6, die sich im Bild durch die genannten Bedingungen ineinander verschoben haben, wird als erfindungsgemäße

Maßnahme eine Kodierung der Lichtlinien 6 durchgeführt, um Mehrdeutigkeiten aufzulösen.

Eine erste, einfache, aber nicht beanspruchte Möglichkeit einer räumlichen Linienkodierung ist eine Variation der Abstände zwischen benachbarten Lichtlinien 6, d.h. die Beleuchtungseinrichtung 4 beleuchtet das zu vermessende Teilstück des Reifenprofils zeitgleich mit mehreren Lichtlinien 6, die alle die gleiche Breite aber unterschiedliche Abstände voneinander haben.

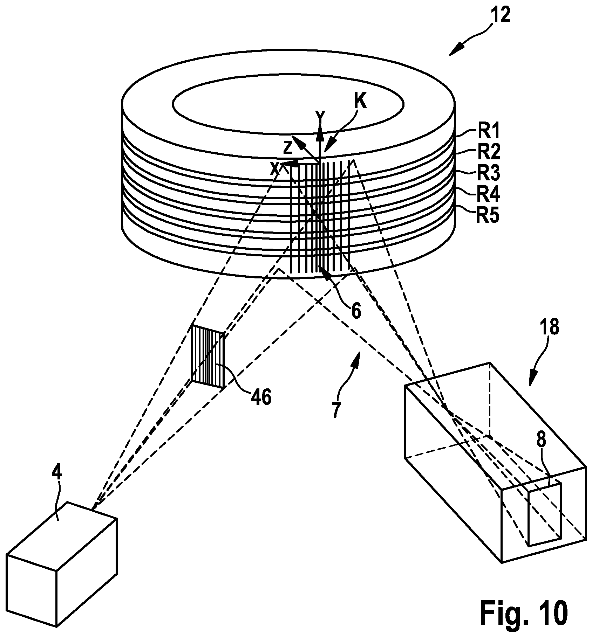

Figur 10 zeigt beispielhaft eine Mehrzahl von Lichtlinien 6, deren Abstände zur jeweils benachbarten Linie von der mittleren Linie aus zu den Rändern links und rechts stetig zunehmen. Die auf dem Bildflächensensor 8 abgebildeten Linienabschnitte sind in der Figur 10 nicht dargestellt, um die Darstellung einfach zu halten.

Für die Erzeugung eines kodierten Linienmusters mit variablem Linienabstand, wie er in der Figur 10 gezeigt ist, können ein oder mehrere diffraktive optische Elemente 46 verwendet werden.

Eine erfindungsgemäße Ausführung sieht eine zeitliche Kodierung der Lichtlinien 6 vor. Eine Anzahl von eindeutig bestimmbaren Lichtlinien 6 wird mehrfach, jedoch zeitlich versetzt, auf den zu messenden Profilausschnitt projiziert. Dabei müssen die Beleuchtungsfrequenz der Beleuchtungseinrichtung 4 und die Aufnahmefrequenz der Bildaufnahmeeinrichtung 18 entsprechend synchronisiert sein. Auch erhöht sich die Anzahl der benötigten Beleuchtungseinrichtungen 4, sofern als Beleuchtungseinrichtung 4 nicht ein programmierbarer Linienprojektor eingesetzt wird.

In einem weiteren alternativen Ausführungsbeispiel werden Lichtlinien 6 mit unterschiedlicher Wellenlänge (Farbe) auf den zu messenden Profilausschnitt projiziert und es werden eine oder mehrere Bildaufnahmeeinrichtungen 18 eingesetzt, die mit einem Farbsensor versehen sind, so dass die Lichtlinien 6 mit unterschiedlicher Wellenlänge (Farbe) getrennt voneinander ausgewertet werden können.

Alle zuvor beschriebenen Kodierungen können auch beliebig miteinander kombiniert werden, um die Eindeutigkeit der Zuordnung zu optimieren und/oder die Anzahl der unterscheidbaren Lichtlinien 6 noch weiter zu erhöhen.

Bei der Überfahrt über die Schlitze 14 in der Fahrbahn 16 werden die Reifen 12 nur in Ausnahmefällen von lediglich einem Messmodul 26, d.h. einer Kombination aus einer Beleuchtungseinrichtung 4 und der zugehörigen Bildaufnahmeeinrichtung 18, erfasst. In der Regel werden die Reifen 12 in den Bildsequenzen von mindestens zwei benachbarten Messmodulen 26 abgebildet. Das liegt zum einen an der Breite der Reifen 12, die oft größer als die Länge L der Schlitze 14 von L=175 mm ist, und zum anderen an der zufälligen Fahrspur, die sich nicht exakt und zuverlässig auf ein einziges Messmodul 26 begrenzen lässt. Im Bereich der Überlappung benachbarter Messmodule 26 werden Lichtlinien 6 beider Messmodule 26 abgebildet. Dies erschwert eine eindeutige Zuordnung der Lichtlinien 6 zusätzlich. Die zuvor beschriebene Kodierung der Lichtlinien 6 muss daher auch geeignet sein, um die Lichtlinien 6 benachbarter Messmodule 26 eindeutig dem jeweiligen Messmodul 26 zuordnen zu können.

Neben einer Kombination der zuvor vorgeschlagenen Kodierungen, die verschiedene DOEs 46 und/oder zusätzlichen technischen Aufwand erfordern, bietet zum Beispiel ein DOE 46, das ein asymmetrisch kodiertes Linienmuster erzeugt, eine einfache und kostengünstige Möglichkeit zur Identifikation der Lichtlinien 6 benachbarter Messmodule 26, z.B. indem das für alle Messmodule 26 verwendete einheitliche DOE 46 in benachbarten Messmodulen 26 in einer wechselseitigen, insbesondere um 180° gedrehten Anordnung verwendet wird.

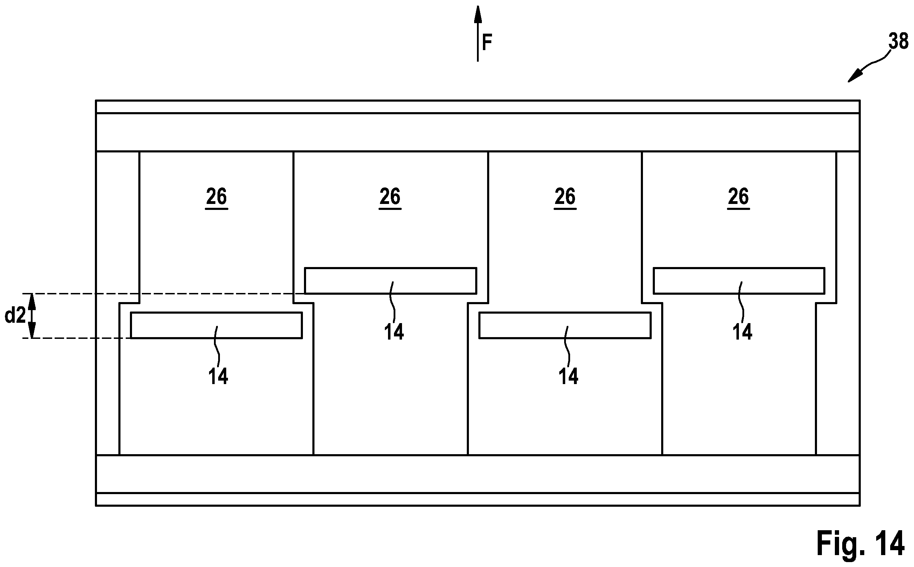

Ein alternatives, in der Figur 14 gezeigtes Konzept sieht vor, die Konstruktion der Messmodule 26 asymmetrisch zu gestalten und benachbarte Messmodule 26 in einer wechselseitig um jeweils 180° gedrehten Ausrichtung zu montieren, so dass die Schlitze 14 in Fahrtrichtung F gegeneinander versetzt sind. Dadurch wird verhindert, dass Lichtlinien 6 in den Messbereich benachbarter Messmodule 26 projiziert werden und eine Lösung mit einheitlich ausgebildeten Messmodulen 26 möglich. Das Zusammenwirken der Schlitze 14 ermöglicht auch in diesem Ausführungsbeispiel eine lückenlose Erfassung des Reifenprofils, unabhängig von der zufälligen Fahrspur.

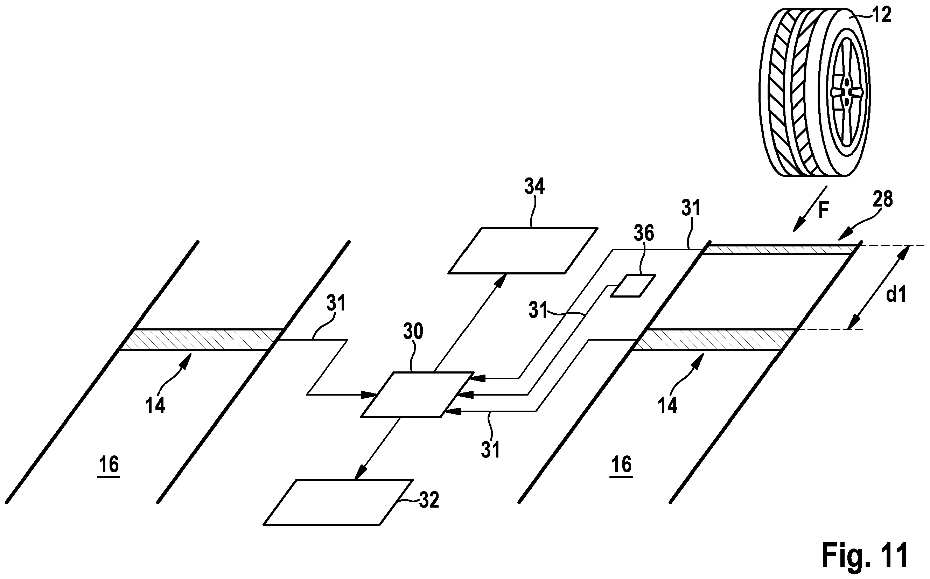

Figur 11 zeigt beispielhaft ein Ausführungsbeispiel einer Vorrichtung zur Messung der Profiltiefe in oder auf einer Fahrbahn 16 quer zur Fahrtrichtung F eines Kraftfahrzeuges 10. Zu einem kompletten Prüfsystem gehören mindestens zwei Messeinrichtungen, eine für jede Fahrzeugseite.

Die Messeinrichtungen zur Messung der Profiltiefe der Reifen 12 beider Fahrzeugseiten sind über Kabel 31 oder drahtlos mit einer gemeinsamen Mess- und Auswerteinrichtung 30 verbunden. Die Mess- und Auswerteeinrichtung 30 ist mit einer Anzeigeeinrichtung 32 zum Anzeigen der Ergebnisse und bei Bedarf mit einem Server 34 verbunden.

Die beschriebene Vorrichtung kann einen zusätzlichen Sensor 28 aufweisen, der ausgebildet ist, um ein auf die Vorrichtung zufahrendes Fahrzeug 10 zu detektieren. Der zusätzliche Sensor 28 ist mit der Mess- und Auswerteeinrichtung 30 verbunden und versetzt die Mess- und Auswerteeinrichtung 30 unmittelbar vor der Überfahrt des Fahrzeuges 10 von einem Ruhezustand in den Messzustand.

Der zusätzliche Sensor 28 kann ein Kontaktschalter sein, der durch einen auf das Prüfsystem zufahrendes Reifen 12 ausgelöst wird. Der zusätzliche Sensor 28 kann auch zur Bestimmung der Geschwindigkeit des Fahrzeugs 10 verwendet werden: Bei einem bekannten Abstand d1 zwischen dem zusätzlichen Sensor 28 und dem Schlitz 14 zur Profiltiefenmessung kann durch die Messung der Zeit, die zwischen Auslösen des zusätzlichen Sensors 28 und dem Überfahren des Schlitzes 14 vergeht, die Geschwindigkeit des Fahrzeugs 10 ermittelt werden.

Zusätzlich kann ein Umweltsensor 36 vorgesehen sein, der beispielsweise ein lichtempfindlicher Sensor ist, der zur Optimierung der Beleuchtung und Abbildung eingesetzt wird, indem der Umweltsensor 36 kontinuierlich oder in einem vorgegebenen Zeitintervall die Intensität des Umgebungslichtes (Tag, Nacht, Sonne, Wolken, ...) misst.

Auch der Umweltsensor 36 ist mit der Mess- und Auswerteeinrichtung 30 des Messsystems verbunden. Die Mess- und Auswerteeinrichtung 30 analysiert die Sensordaten und stellt optimale Parameter für die Beleuchtungseinrichtung 4 (z.B. Beleuchtungsintensität) und/oder die Bildaufnahmeeinrichtung 18 (z.B. Integrationszeit) bereit, die eine Unter- oder Überbelichtung während der Messungen verhindern.

In einem Ausführungsbeispiel kann eine zusätzliche Bildaufnahmeeinrichtung gleichzeitig die Funktionen des Kontaktsensors 28 und des Umweltsensors 36 realisieren und sowohl ein sich der Messvorrichtung näherndes Fahrzeug 10 detektieren, als auch das Umgebungslicht analysieren. Die zusätzliche Bildaufnahmeeinrichtung kann ggf. auch das Kennzeichen des Fahrzeugs 10 ermitteln und es auf diese Weise ermöglichen, die Messergebnisse automatisch dem Fahrzeug 10 zuzuordnen.

In einem alternativen Ausführungsbeispiel wird die Bildaufnahmeeinrichtung 18 der Messvorrichtung selbst als Sensor zur Analyse der Intensität des Umgebungslichtes eingesetzt. In einem separaten Messmodus wird kontinuierlich oder in einem vorgegebenen Zeitintervall die Intensität des Umgebungslichtes analysiert und die optimalen Parameter zur Profiltiefenmessung werden fortlaufend ermittelt. Sobald sich ein Fahrzeugs 10 der Messvorrichtung nähert, wird der Messmodus der Messvorrichtung auf die eigentliche Profiltiefenmessung umgestellt, bei der Profiltiefenmessung werden dann die zuvor ermittelten Parameter verwendet.

Die Mess- und Auswerteeinrichtung 30 ist beispielsweise mit einer Rechnereinrichtung (CPU), einer Speichereinrichtung (RAM) und einer Auswertesoftware ausgestattet und führt die Analyse der Messdaten des Umweltsensors 36, die Berechnung der Fahrzeuggeschwindigkeit, eine Bildanalyse zur Unterscheidung des Reifentyps, zur Berechnung der Profiltiefe, Profiltiefenabweichung und flächenhaften Profilstruktur jedes Reifens 12, eine Berechnung der relativen Abweichung der Profiltiefen und Profiltiefenabweichung der Reifen 12 an jeder Achse, eine Bewertung der Profiltiefe, Profiltiefenabweichung und Profilstruktur für jeden Reifen 12 anhand definierter Grenzwerte, eine Bewertung der relativen Abweichung und der Differenz der Profiltiefenabweichung der Reifen 12 an einer Achse anhand definierter Grenzwerte sowie eine zusammenfassende Reifendiagnose für das Gesamtfahrzeug durch und steuert die Anzeigeeinrichtung 32 zur Ausgabe der Prüfergebnisse sowie bei Bedarf die Übertragung der Ergebnisse der Prüfung und Auswertung an den übergeordneten Server 34.

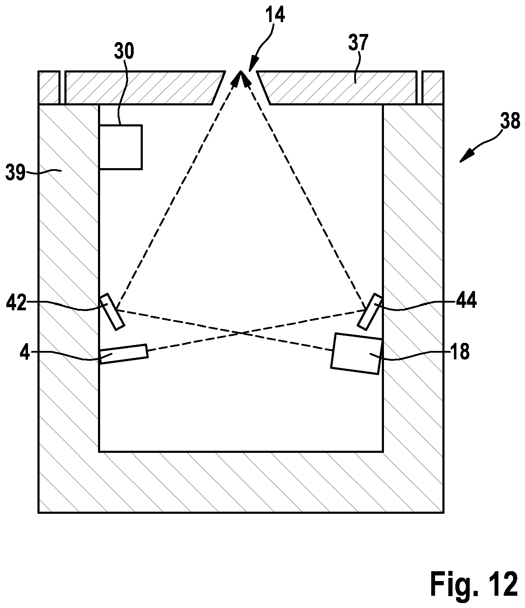

Ein erfindungsgemäßes Messsystem kann zweckmäßigerweise in eine Überfahrrinne 38 integriert werden, wie sie aus dem Straßenbau bekannt und bewährt sind. Figur 12 zeigt ein Ausführungsbeispiel (ohne die Darstellung der Anschlusskabel) mit einer solchen Überfahrrinne 38 im Querschnitt. Zur Optimierung des verfügbaren Bauraums werden die Abbildung und die Beleuchtungslinien über Spiegel 42, 44 umgelenkt. Durch eine symmetrische Anordnung der optischen Elemente 4, 18, 42, 44 wird erreicht, dass die Strahllängen für die Beleuchtungseinrichtung 4 und die Bildaufnahmeeinrichtung 18 identisch sind und damit der Fächerwinkel der Lichtebenen 5 der Beleuchtungseinrichtung 4 ebenso groß ist wie der Öffnungswinkel $\varphi$ der Bildaufnahmeeinrichtung 18.

Eine Montage der optischen Elemente 4, 18, 42, 44 sowie der Mess- und Auswerteeinrichtung 30 an einer Seitenwand 39 der Überfahrrinne 38 schützt die optischen Elemente 4, 18, 42, 44 und die Mess- und Auswerteeinrichtung 30 zum Beispiel vor Stauwasser, dass sich am Boden der Überfahrrinne 38 sammelt. Die Montage aller Komponenten 4, 18, 42, 44, 30 des Messsystems an einem Deckel 37 der Überfahrrinne 38 ermöglicht es, die Komponenten 4, 18, 42, 44, 30 einfach zu warten und/oder auszutauschen. Der Kontaktsensor 28 und der Umweltsensor 36 sind in der Fig.

12 nicht dargestellt. Sie können sowohl im Deckel 37 als auch außerhalb der Überfahrrinne 38 angeordnet werden.

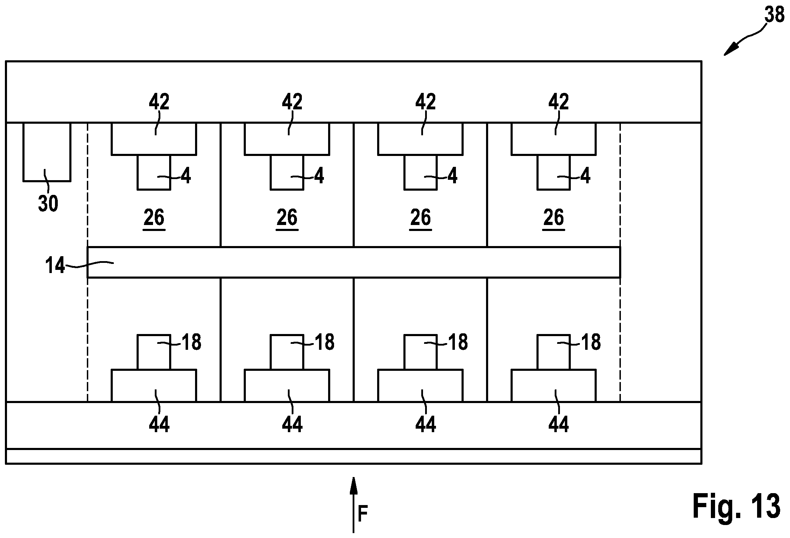

Figur 13 zeigt die Überfahrrinne 38 eines erstes Ausführungsbeispiels einer erfindungsgemäßen Messvorrichtung zur Messung der Profiltiefe auf einer Fahrzeugseite mit einer Anordnung von vier quer zur Fahrtrichtung F nebeneinander angeordneten Messmodulen 26, die einen gemeinsamen Schlitz 14 haben, in der Aufsicht. Auf die Darstellung der Anschlusskabel wurde aus Gründen der Übersichtlichkeit erneut verzichtet. Ein Fahrzeug 10 fährt in dieser Darstellung zur Messung von unten nach oben (in Fahrtrichtung F) oder von oben nach unten über den Schlitz 14.

Figur 14 zeigt die Überfahrrinne 38 in einer vereinfachten Darstellung ohne die optischen Elemente 4, 18, 42, 44, die Auswerteeinrichtung 30 und die Anschlusskabel in einem zweiten Ausführungsbeispiel mit einer Anordnung von vier nebeneinander angeordneten Messmodulen 26, die eine asymmetrische Konstruktion aufweisen und wechselseitig um jeweils 180° gedreht in der Überfahrrinne 38 angeordnet sind, so dass die vier Schlitze 14 in Fahrtrichtung F zueinander versetzt angeordnet sind. Die Schlitze 14 sind so konstruiert, dass sie gemeinsam die gesamte Breite der Überfahrrinne 38 abdecken und quer zur Fahrtrichtung F keine Lücke im Schlitz 14 vorhanden ist. Ein Fahrzeug 10 fährt in dieser Darstellung zur Messung von unten nach oben (in Fahrtrichtung F) oder von oben nach unten über die Schlitze 14.

Der Schlitz 14 kann durch eine transparente Schicht, z.B. aus Glas oder Plexiglas, verschlossen werden, um die optischen Elemente 4, 18, 42, 44 vor Schmutz und Feuchtigkeit zu schützen.

Eine Messung ist gültig, wenn alle Lichtlinien 6 auf dem Bildflächensensor 8 abgebildet sind. Unter günstigen Bedingungen, d.h. bei großen Latschlängen (die Latschlänge ist abhängig vom Reifentyp, vom Reifendruck und der Radlast) können mit einer Aufnahmefrequenz von 60 Bildern pro Sekunde auch bei Geschwindigkeiten von mehr 15 km/h gültige Messergebnisse erzielt werden, wenn mindestens ein Bild erfasst wird, dass alle Linien umfasst.

Sind nicht alle Lichtlinien 6 auf dem Bildflächensensor 8 abgebildet, wird die Messung als ungültig gewertet. Überschreitet zusätzlich die Überfahrgeschwindigkeit einen vorgegebenen Grenzwert von z.B. 15 km/h, wird als mögliche Ursache für die Fehlmessung eine zu hohe Geschwindigkeit ausgewiesen.

Eine Möglichkeit der Geschwindigkeitsmessung ohne zusätzlichen Sensor bzw. Kontaktschalter 28 bietet die in Figur 14 gezeigte Anordnung, bei der die Schlitze 14 mit einem bekannten Abstand d2 in Fahrtrichtung F versetzt zueinander angeordnet sind. Die Messung des zeitlichen Versatzes bei der Überquerung der Schlitze 14 benachbarter Messmodule 26 erfolgt durch eine Korrelationsanalyse der aufgezeichneten Lichtlinien 16 in den Bildsequenzen benachbarter Messmodule 26.

Während einer Messung fährt das Fahrzeug 10 zuerst mit einem Vorderrad 12 und dann mit einem Hinterrad 12 über den Schlitz 14 bzw. die Schlitze 14 der Messanordnung. So können mit einer Messanordnung die Profiltiefen aller Räder 12 auf einer Fahrzeugseite in einem Messvorgang nahezu gleichzeitig bestimmt werden.

Anschließend werden für alle Räder 12 die Ergebnisse automatisch bewertet und z.B. über eine Ampel farblich und/oder durch einen geeigneten Bewertungstext dem Fahrer des Fahrzeugs angezeigt.

Die Bewertung der Profiltiefe erfolgt dabei auf der Grundlage der gesetzlich vorgegebenen Mindestprofiltiefe von 1,6 mm und einem aus Gründen der Fahrsicherheit empfohlenen Grenzwert von 3 bis 4 mm für die Warnung vor stark abgenutzten Reifen mit nur noch geringer Restnutzungsdauer.

Unterschreitet eine gemessene Profiltiefe den vorgegebenen Warnwert, wird die Ampelfarbe "Gelb", bei Unterschreiten der Mindestprofiltiefe wird die Ampelfarbe "Rot" und sonst die Ampelfarbe "Grün" ausgegeben.

Tabelle 1

| Ereignis | zusätzlicher Messwert | Bewertungstext | Ampelfarbe |
|---|---|---|---|
|  |  |  |  |
| Winter | Sommerreifen-Profil | falscher Reifentyp | rot |
|  |  |  |  |
| Sommer | Winterreifen-Profil | Reifentyp prüfen | gelb |
|  |  |  |  |
| Mittlere Profiltiefe <= 1,6 mm |  | Mindestprofiltiefe erreicht | rot |
|  |  |  |  |
| Sommerreifen: Mittlere Profiltiefe < 3 mm und > 1, mm |  | Reifenverschleiß prüfen | gelb |
|  |  |  |  |

(fortgesetzt)

| Ereignis | zusätzlicher Messwert | Bewertungstext | Ampelfarbe |
|---|---|---|---|
| Winterreifen: Mittlere Profiltiefe < 4 mm und > 1,6 mm | | Reifenverschleiß prüfen | gelb |
| | | | |
| Sommerreifen: Mittlere Profiltiefe ≥ 3 mm | | | grün |
| | | | |
| Winterreifen: Mittlere Profiltiefe ≥ 4 mm | | | grün |
| | | | |
| Sommerreifen: Mittlere Profiltiefe ≥ 3 mm | Profiltiefenabweichung über Reifenbreite > Grenzwert | Reifenverschleiß einseitig, Fahrwerk prüfen | gelb |
| | | | |
| Winterreifen: Mittlere Profiltiefe ≥ 4 mm | Profiltiefenabweichung über Reifenbreite > Grenzwert | Reifenverschleiß einseitig, Fahrwerk prüfen | gelb |
| | | | |
| Sommerreifen: Mittlere Profiltiefe ≥ 3 mm | Tiefe der flächenhaften Profilstruktur > Grenzwert | Reifenverschleiß prüfen | gelb |
| | | | |
| Winterreifen:Mittlere Profiltiefe ≥ 4 mm | Tiefe der flächenhaften Profilstruktur > Grenzwert | Reifenverschleiß prüfen | gelb |

Ein weiteres Prüfkriterium für die Reifenprofiltiefe stellt die Tatsache dar, dass die Profiltiefe für die Reifen 12 auf einer Achse in der Regel gleich sein sollte, aber zwischen den Reifen 12 auf der Vorder- und Hinterachse durchaus differieren darf:

Tabelle 2

| Ereignis | zusätzlicher Messwert | Bewertungstext | Anmerkung | Ampelfarbe |
|---|---|---|---|---|
| Mittlere Profiltiefe an beiden Rädern Sommerräder ≥ 3 mm, Winterräder ≥ 4 mm | Differenz der mittleren Profiltiefe links/rechts > Grenzwert | Reifenverschleiß unterschiedlich, Reifendruck, Reifenqualität prüfen | Zuweisung an das Rad mit der geringeren Profiltiefe, Ampelfarbe "grün" wird überschrieben | gelb |
| Mittlere Profiltiefe an beiden Rädern Sommerräder ≥ 3 mm, Winterräder ≥ 4 mm | Differenz der Profiltiefenabweichung über die Reifenbreite links/rechts > Grenzwert | Reifenverschleiß unterschiedlich, Fahrwerk prüfen | Zuweisung an beide Räder der Achse, Ampelfarbe "grün" wird überschrieben | gelb |

Da bei einem eventuellen Reifenwechsel während der Fahrzeugnutzung auf einer Achse immer die gleichen Reifen montiert werden, ergibt sich mit einer relativen Profilanalyse eine zusätzliche Möglichkeit, Abweichungen zwischen linkem und rechtem Rad einer Achse zu prüfen. Die Differenz zwischen den beiden Profiltiefen sollte einen definierten Grenzwert nicht überschreiten. Wird der Grenzwert überschritten, deutet dies auf einen fehlerhaften Reifendruck oder Reifen unterschiedlicher Qualität hin und es wird die Ampelfarbe "Gelb" ausgegeben. Eine sich über die Reifenbreite verändernde Profiltiefe gibt einen Hinweis auf eine fehlerhafte Fahrwerkseinstellung. Wird ein hierfür vorgegebener Grenzwert überschritten, wird die Ampelfarbe "Gelb" ausgegeben:

Tabelle 3

| Ereignis | zusätzlicher Messwert | Bewertungstext | Anmerkung | Ampelfarbe |
|---|---|---|---|---|
| Alle Räder wurden mit "grün" bewertet | | | | grün |
| Mindestens ein Rad wurde mit "gelb" bewertet | | Reifenverschleiß zu hoch | | gelb |
| Mindestens ein Rad wurde mit "rot" bewertet | | Reifenverschleiß zu hoch | | rot |
| mindestens erforderliche Linienzahl nicht in wenigstens einem Bild erreicht | v > 15 km/h | Messung ungültig; Geschwindigkeit zu hoch | Abbruch der Auswertung, keine weiteren Analysen | rot |
| mindestens erforderliche Linienzahl nicht in wenigstens einem Bild erreicht | v < 15 km/h | Messung ungültig | Abbruch der Auswertung, keine weiteren Analysen, Information an Servicezentrale | rot |

Die Ausgabe an einer Anzeigevorrichtung für den Fahrer zeigt vorzugsweise nur ein Ergebnis für das Gesamtfahrzeug:

Tabelle 4

| | Bewertungstext | Ampelfarbe |
|---|---|---|
| Ergebnis Reifendiagnose | Reifenverschleiß prüfen | rot |
| | | |
| Reifen vorne links | Reifenverschleiß normal | grün |
| Reifen vorne rechts | Mindestprofiltiefe erreicht | rot |
| Reifen hinten links | Reifenverschleiß normal | grün |
| Reifen hinten rechts | Reifenverschleiß einseitig, Fahrwerk prüfen | gelb |

Ein Verfahren zur Profiltiefenmessung auf einer Fahrzeugachse kann somit insgesamt die folgenden Verfahrensschritte umfassen:

1. Analyse des Umgebungslichtes (Tag, Nacht, Sonne, Wolken) und Einstellen der Beleuchtungsintensität der Beleuchtungseinrichtungen 4 und der Integrationszeit der Bildaufnahmeeinrichtungen 18.

2. Aktivieren des Messsystems bei Annäherung eines Fahrzeugs 10.

3. Beleuchten des Schlitzes mit mehreren kodierten Lichtlinien 6 und kontinuierliches Erfassen und Speichern der Bilder der Bildaufnahmeeinrichtungen 18 beim Überrollen mit dem Reifen 12 (auf beiden Fahrzeugseiten mit jeweils einem Messsystem).

4. Bestimmung der Fahrgeschwindigkeit.

5. Durchführung der Bildanalyse mit eindeutiger Identifikation der einzelnen Lichtlinien 6 (Dekodierung), Bestimmung aller Linienpunkte für jeden Reifen 12.

6. Berechnen der Profiltiefe für jede Profilrille R1, R2, R3, R4, R5 und Lichtlinie 6 für jeden Reifen 12. Ermittlung eines repräsentativen Profiltiefenwertes für jede Rille R1, R2, R3, R4, R5 aus den Informationen aller Lichtlinien 6.

7. Berechnung einer mittleren Profiltiefe für jeden Reifen 12 aus den Profiltiefen aller Profilrillen R1, R2, R3, R4, R5 sowie die Profiltiefenabweichung über die Breite des Reifens 12.

8. Prüfen der Gültigkeit der Messung jedes Reifens 12.

8a. Sind nicht alle Lichtlinien 6 in mindestens einem Bild abgebildet und ist die berechnete Geschwindigkeit größer als der Grenzwert, wird dem Fahrzeug 10 der Zustand "Messung ungültig, Geschwindigkeit zu hoch: Ampelfarbe Rot" zugeordnet. Die Auswertung wird abgebrochen. Es erfolgt keine weitere Analyse, sondern eine entsprechende Ausgabe an den Fahrer gemäß Verfahrensschritt 15.
8b. Sind nicht alle Lichtlinien 6 in mindestens einem Bild abgebildet und ist die berechnete Geschwindigkeit geringer als der Grenzwert, wird dem Fahrzeug 10 der Zustand "Messung ungültig (nicht messbereit): Ampelfarbe Rot" zugeordnet. Die Auswertung wird abgebrochen. Es erfolgt keine weitere Analyse, sondern eine entsprechende Ausgabe an den Fahrer und an die Servicezentrale gemäß Verfahrensschritt 15.

9. Ermitteln der flächenhaften Profilstruktur aus den bestimmten Linienpunkten jedes Reifens 12.

10. Analyse der Profilstruktur und Bestimmung des Reifentyps jedes Reifens 12.

10a. Wird in der Jahreszeit Winter der Reifentyp als Sommerreifen identifiziert, wird diesem Reifen 12 der Zustand "Falscher Reifentyp: Ampelfarbe Rot" zugeordnet.
10b. Wird in der Jahreszeit Sommer der Reifentyp als Winterreifen identifiziert, wird diesem Reifen 12 der Zustand "Reifentyp prüfen: Ampelfarbe Gelb" zugeordnet.

11. Bewerten der mittleren Profiltiefe jedes Reifens 12 durch Vergleich der gemessenen Profiltiefe mit definierten Grenzwerten (die Grenzwerte für Sommer- und Winterreifen können verschieden sein).

11a. Hat die mittlere Profiltiefe die gesetzlich vorgegebene Mindestprofiltiefe erreicht oder unterschritten, wird diesem Reifen 12 der Zustand "Mindestprofiltiefe erreicht: Ampelfarbe Rot" zugeordnet.
11b. Liegt die mittlere Profiltiefe zwischen der gesetzlich vorgegebenen Mindestprofiltiefe und dem sicherheitsrelevanten Grenzwert, wird diesem Reifen 12 der Zustand "Reifenverschleiß prüfen: Ampelfarbe Gelb" zugeordnet.
11c. Ist die mittlere Profiltiefe größer oder gleich dem sicherheitsrelevanten Grenzwert, wird diesem Reifen 12 der Zustand "Ampelfarbe Grün" zugeordnet.

12. Bewerten der Abweichung der Profiltiefe über die Reifenbreite jedes Reifens 12 anhand eines definierten Grenzwertes, wenn die mittlere Profiltiefe größer oder gleich dem sicherheitsrelevanten Grenzwert ist.
12a. Überschreitet die Profiltiefenabweichung den Grenzwert, wird diesem Reifen 12 der Zustand "Reifenverschleiß einseitig, Fahrwerk prüfen: Ampelfarbe Gelb" zugeordnet.

13. Analyse der flächenhaften Profilstruktur jedes Reifens 12 in Laufrichtung auf Vorliegen von Sägezahnstruktur und Auswaschungen und Bewertung anhand eines definierten Grenzwertes, wenn die mittlere Profiltiefe größer oder gleich dem sicherheitsrelevanten Grenzwert ist.
13a. Überschreitet die Tiefe der flächenhaften Profilstruktur den Grenzwert, wird diesem Reifen 12 der Zustand "Reifenverschleiß prüfen: Ampelfarbe Gelb" zugeordnet.

14. Bestimmung der relativen Differenz der mittleren Profiltiefe und der Profiltiefenabweichung über die Reifenbreite der Reifen 12 einer Achse und Vergleich mit vordefinierten Grenzwerten, wenn die mittlere Profiltiefe beider Reifen 12 größer oder gleich dem sicherheitsrelevanten Grenzwert ist.

14a. Ist die berechnete Differenz der mittleren Profiltiefe links/rechts größer als der Grenzwert, wird dem Reifen 12 mit der geringeren Profiltiefe der Zustand "Reifenverschleiß unterschiedlich, Reifendruck, Reifenqualität prüfen: Ampelfarbe Gelb" zugeordnet; die Ampelfarbe "Grün" wird überschrieben.
14b. Ist die berechnete Differenz der Profiltiefenabweichung über Reifenbreite links/rechts größer als der Grenzwert, wird beiden Reifen 12 der Achse der Zustand "Reifenverschleiß unterschiedlich, Fahrwerk prüfen: Ampelfarbe Gelb" zugeordnet; die Ampelfarbe "Grün" wird überschrieben.

15. Bestimmung des Zustandes für das Gesamtfahrzeug.

15a. Wurden alle Reifen 12 mit der Ampelfarbe "Grün" bewertet, wird dem Gesamtfahrzeug der Zustand "Ampelfarbe Grün" zugeordnet.

15b. Wurde mindestens ein Reifen 12 mit der Ampelfarbe "Gelb" bewertet, wird dem Gesamtfahrzeug der Zustand "Reifenverschleiß prüfen, Ampelfarbe Gelb" zugeordnet.

15c. Wurde mindestens ein Reifen 12 mit der Ampelfarbe "Rot" bewertet, wird dem Gesamtfahrzeug der Zustand "Reifenverschleiß prüfen, Ampelfarbe Rot" zugeordnet.

15d. Wurden nicht alle Lichtlinien 6 in mindestens einem Bild abgebildet und ist die berechnete Geschwindigkeit größer als der Grenzwert, wird dem Fahrzeug 10 der Zustand "Messung ungültig, Geschwindigkeit zu hoch: Ampelfarbe Rot" zugeordnet.

15e. Wurden nicht alle Lichtlinien 6 in mindestens einem Bild abgebildet und ist die berechnete Geschwindigkeit geringer als der Grenzwert, wird dem Fahrzeug 10 der Zustand "Messung ungültig (nicht messbereit): Ampelfarbe Rot" zugeordnet: Zusätzlich wird die Servicezentrale informiert.

16. Optische Anzeige des Prüfergebnisses für den Fahrer:

16a. Ergebnis der Reifendiagnose für das Gesamtfahrzeug 10 mit Klartext der Bezeichnung des ermittelten Zustands und/oder der an den Zustand gekoppelten Ampelfarbe.

16b. Optional Ergebnis der Reifendiagnose für jeden einzelnen Reifen 12 mit Klartext der Bezeichnung des ermittelten Zustands und/oder der an den Zustand gekoppelten Ampelfarbe und/oder den ermittelten Messwerten zur Bewertung des einzelnen Reifens 12 und/oder zur Vergleichsbewertung der Reifen 12 einer Achse.

17. Optional Übertragung der Messdaten und Ergebnisse an einen Server 34.

Die Verfahrensschritte für ein zweiachsiges Fahrzeug 10 umfassen die oben beschriebenen Verfahrensschritte 3 bis 14 für die Vorderachse und unmittelbar daran anschließend die gleichen Verfahrensschritte 3 bis 14 für die Hinterachse. Die Verfahrensschritte 15 bis 17 werden für alle Reifen 12 des Fahrzeuges gleichzeitig ausgeführt.

**Patentansprüche**

1. Vorrichtung zum Vermessen des Profils der Lauffläche eines an einem Fahrzeug (10) montierten Reifens (12) mit einem Messmodul (26), das dazu ausgebildet ist, von dem Fahrzeug (10) überfahren zu werden und

wenigstens eine Beleuchtungseinrichtung (4), die so ausgebildet und angeordnet ist, dass sie im Betrieb wenigstens eine Lichtlinie (6) auf das zu vermessende Profil projiziert, und

wenigstens eine Bildaufnahmeeinrichtung (18), die zur Aufnahme wenigstens eines Bildes wenigstens eines Bereiches des zu vermessenden Profils ausgebildet ist, aufweist

wobei die wenigstens eine Beleuchtungseinrichtung (4) und die wenigstens eine Bildaufnahmeeinrichtung (18) so ausgebildet und angeordnet sind, dass die Beleuchtungsrichtung der Beleuchtungseinrichtung (4) und die Bildaufnahmerichtung der Bildaufnahmeeinrichtung (18) während einer Messung weder parallel zueinander noch orthogonal zur Lauffläche des Reifens (12) ausgerichtet sind, und die Vorrichtung mehrere Messmodule (26) aufweist, die quer zur Laufrichtung (F) des Reifens (12) angeordnet und mit einer gemeinsamen Auswerteeinrichtung (30) verbunden sind;

wobei die Beleuchtungseinrichtungen (4) so ausgebildet sind, dass die einzelnen Lichtlinien (6) kodiert sind, so dass sie identifizierbar und insbesondere eindeutig einem der Messmodule (26) zuordenbar sind;

**dadurch gekennzeichnet, dass** die Lichtlinien (6) zeitlich kodiert sind, indem die Beleuchtungseinrichtung (4) so ausgebildet ist, dass die Lichtlinien (6) nicht gleichzeitig, sondern in einer vorgegebenen zeitlichen Abfolge auf die Lauffläche des Reifens (12) projiziert werden.

2. Vorrichtung nach Anspruch 1, wobei die Beleuchtungseinrichtungen (4) der Messmodule (26) jeweils ausgebildet sind, ein Muster, das mehrere Lichtlinien (6) umfasst, auf das Profil zu projizieren, wobei die Beleuchtungseinrichtungen (4) insbesondere jeweils wenigstens ein diffraktives optisches Element (46) aufweisen, das ausgebildet ist, um ein solches Muster zu erzeugen.

3. Vorrichtung nach einem der vorangehenden Ansprüche, wobei die Bildaufnahmeeinrichtungen (18) jeweils wenigsten ein optisches Element (22, 23), insbesondere eine Zylinderlinse, aufweisen, das ausgebildet ist, um den Bildaufnahmebereich der Bildaufnahmeeinrichtung (18) zu verzerren, insbesondere um den Bildaufnahmebereich parallel zur Laufrichtung (F) des Reifens (12) zu verdichten und/oder quer zur Laufrichtung (F) des Reifens (12) aufzuweiten.

4. Vorrichtung nach einem der vorangehenden Ansprüche, wobei die Bildaufnahmeeinrichtung (18) einen Flächenbildsensor (8) aufweist, der in den beiden Richtungen seiner Fläche ein unterschiedliche Anzahl an Pixeln aufweist und der so angeordnet ist, dass die Richtung, die die höhere Anzahl an Pixeln aufweist, parallel zur Fahrtrichtung (F) des Fahrzeugs (10) angeordnet ist.

5. Vorrichtung nach einem der Ansprüche 2 bis 4, wobei die Messmodule (26) nebeneinander ausgebildet sind und wobei die diffraktiven optischen Elemente (46) unmittelbar benachbarter Messmodule (26) gegeneinander verdreht ausgerichtet sind, so dass sie unterschiedlich kodierte Lichtmuster erzeugen.

6. Vorrichtung nach einem der vorangehenden Ansprüche, wobei die Messmodule (26) so ausgebildet sind, dass die Beleuchtungseinrichtungen (4) und Bildaufnahmeeinrichtungen (18) in der Laufrichtung (F) des zu vermessenden Reifens (12) versetzt zueinander angeordnet sind.

7. Vorrichtung nach einem der vorangehenden Ansprüche, wobei der Öffnungswinkel $\varphi$ der Bildaufnahmeeinrichtung (18) und der Fächerwinkel der Lichtebene (5) der Beleuchtungseinrichtung (4) $\pm$ 20° beträgt und wobei der Winkel $\delta$ zwischen der Beleuchtungsrichtung der Beleuchtungseinrichtung (4) und der Bildaufnahmerichtung der Bildaufnahmeeinrichtung (18) zwischen 20° bis 45°, insbesondere 40° beträgt.

8. Vorrichtung nach einem der vorangehenden Ansprüche, die wenigstens einen zusätzlichen Sensor (28) aufweist, der ausgebildet ist, um die Annäherung eines Reifens (12) und/oder die Beleuchtung des Reifenprofils zu detektieren.

9. Verfahren zum Vermessen des Profils der Lauffläche eines an einem Fahrzeug (10) montierten Reifens (12) mit einer Vorrichtung nach einem der vorangehenden Ansprüche, wobei das Verfahren umfasst:

das Fahrzeug mit dem zu vermessenden Reifen (12) über die Vorrichtung zu rollen;
mit den Beleuchtungseinrichtungen (4) jeweils wenigstens eine Lichtlinie (6) auf die Lauffläche des zu vermessenden Reifens (12) zu projizieren, wobei die Lichtlinien (6) zeitlich kodiert sind, indem die Lichtlinien (6) nicht gleichzeitig, sondern in einer vorgegebenen zeitlichen Abfolge auf die Lauffläche des Reifens (12) projiziert werden;
mit den Bildaufnahmeeinrichtungen (18) jeweils wenigstens ein reflektiertes Bild der Lauffläche aufzunehmen;
die Lichtlinien (6) in den aufgenommenen Bildern zu identifizieren und einer der Beleuchtungseinrichtungen (4) zuzuordnen;
die aufgenommenen Bilder der Lichtlinien (6) auszuwerten, um die Tiefe des Profils zu bestimmen.

10. Verfahren nach Anspruch 9, wobei das Verfahren zusätzlich umfasst, die Geschwindigkeit des Reifens (12) zu bestimmen und das Verfahren abzubrechen, wenn eine zulässige Maximalgeschwindigkeit überschritten wird.

11. Verfahren nach Anspruch 9 oder 10, wobei das Verfahren zusätzlich umfasst, die bestimmte Profiltiefe mit einem vorgegebenen Grenzwert zu vergleichen und eine Warnung auszugeben, wenn die bestimmte Profiltiefe den vorgegebenen ersten Grenzwert unterschreitet.

12. Verfahren nach einem der Ansprüche 9 bis 11, wobei das Verfahren zusätzlich umfasst, die für die Reifen (12) einer Achse bestimmten Profiltiefen miteinander zu vergleichen und eine Warnung auszugeben, wenn die Differenz zwischen den Profiltiefen der Reifen (12) einer Achse einen vorgegebenen zweiten Grenzwert unterschreitet.

13. Verfahren nach einem der Ansprüche 9 bis 12, wobei das Verfahren zusätzlich umfasst, Abbildungsparameter, insbesondere die Beleuchtungsstärke der Beleuchtungseinrichtung (4) und/oder die Integrationszeit der Bildaufnahmeeinrichtung (18), zu optimieren.

**Claims**

1. An apparatus for measuring the profile of a tread of a tire (12) mounted on a vehicle (10),
comprising a measuring module (26) adapted to be travelled over by the vehicle (10), and
at least one illumination device (4) which is configured and arranged such that during operation it projects at least one light line (6) onto the profile to be measured, and
at least one image recording device (18) which is configured for recording at least one image of at least one area of the profile to be measured,
wherein the at least one illumination device (4) and the at least one image recording device (18) are configured and arranged such that the illumination direction of the illumination device (4) and the image recording direction of the image recording device (18) are oriented neither parallel to one another nor orthogonally with respect to the tread of the tire (12) during a measurement,
and the apparatus comprises a plurality of measuring modules (26) arranged transversely with respect to the running direction (F) of the tire (12) and connected to a shared evaluation device (30);
wherein the illumination devices (4) are configured such that the individual light lines (6) are encoded to be identifiable and in particular to permit unambiguous association thereof with one of the measuring modules (26); **characterized in that** the light lines (6) comprise a temporal encoding **in that** the illumination device (4) is configured such that the light lines (6) are not projected simultaneously onto the tread of the tire (12), but in a predefined time sequence.

2. The apparatus according to claim 1,
wherein the illumination devices (4) of the measuring modules (26) are each configured for projecting a pattern having multiple light lines (6) onto the profile, and wherein the illumination devices (4) in particular each include at least one diffractive optical element (46) configured to generate such pattern.

3. The apparatus according to any of the preceding claims,
wherein the image recording devices (18) each include at least one optical element (22, 23), in particular a cylindrical lens, configured for distorting the image recording range of the image recording device (18), in particular for compressing the image recording range parallel to the running direction (F) of the tire (12) and/or expanding the same transverse to the running direction (F) of the tire (12).

4. The apparatus according to any of the preceding claims,
wherein the image recording device (18) includes a surface image sensor (8) which has a different number of pixels in both directions of its surface and which is arranged such that the direction having the higher number of pixels is arranged parallel to the running direction (F) of the vehicle (10).

5. The apparatus according to any of claims 2 to 4,
wherein the measuring modules (26) are provided next to one another and wherein the diffractive optical elements (46) of directly adjacent measuring modules (26) are oriented twisted against each other to generate differently encoded light patterns.

6. The apparatus according to any of the preceding claims,
wherein the measuring modules (26) are configured such that the illumination devices (4) and image recording devices (18) are arranged offset relative to one another in the running direction (F) of the tire (12) to be measured.

7. The apparatus according to any of the preceding claims,
wherein the opening angle φ of the image recording device (18) and the fan angle of the light plane (5) of the illumination device (4) is ±20°, and wherein the angle δ between the illumination direction of the illumination device (4) and the image recording direction of the image recording device (18) is 20° to 45°, in particular 40°.

8. The apparatus according to any of the preceding claims,
comprising at least one additional sensor (28) configured for detecting the approach of a tire (12) and/or the illumination of the tire profile.

9. A method for measuring the profile of the tread of a tire (12) mounted on a vehicle (10) by means of an apparatus according to any of the preceding claims, said method comprising:

rolling the vehicle with the tire (12) to be measured over said apparatus;
projecting, by means of the illumination devices (4), at least one light line (6) each onto the tread of the tire (12) to be measured, the light lines (6) comprising a temporal encoding in that the light lines (6) are not projected simultaneously onto the tread of the tire (12), but in a predefined time sequence; recording, by means of the image recording devices (18), each time at least one reflected image of the tread;
identifying the light lines (6) in the recorded images and associating the same with one of the illumination devices (4); and

evaluating the recorded images of the light lines (6) so as to determine the depth of the profile.

10. The method according to claim 9,
wherein the method further comprises determining the speed of the tire (12) and aborting the method when a permissible maximum speed is exceeded.

11. The method according to claim 9 or 10,
wherein the method further comprises comparing the determined profile depth to a predefined limit value and outputting a warning when the determined profile depth is less than the predefined first limit value.

12. The method according to any of claims 9 to 11,
wherein the method further comprises comparing the profile depths determined for the tires (12) on one axle and outputting a warning when the difference between the profile depths of the tires (12) on one axle is less than a predefined second limit value.

13. The method according to any of claims 9 to 12,
wherein the method further comprises optimizing imaging parameters, in particular the illumination intensity of the illumination device (4) and/or the integration time of the image recording device (18).

**Revendications**

1. Dispositif de mesure de la sculpture de la surface de roulement d'un pneu (12) monté sur un véhicule automobile (10) avec un module de mesure (26), réalisé de manière à ce que le véhicule automobile (10) roule dessus et présentant
au moins un dispositif d'éclairage (4) réalisé et disposé de manière à projeter en service au moins une ligne lumineuse (6) sur la sculpture à mesurer, et
au moins un dispositif de capture d'images (18) réalisé de manière à capturer au moins une image d'au moins une zone de la sculpture à mesurer,
dans lequel le dispositif d'éclairage (4), un au moins, et le dispositif de capture d'images (18), un au moins, sont réalisés et disposés de telle sorte que la direction d'éclairage du dispositif d'éclairage (4) et la direction de capture d'images du dispositif de capture d'images (18) ne sont orientées pendant une mesure ni parallèlement l'une par rapport à l'autre ni orthogonalement par rapport à la surface de roulement du pneu (12), et où le dispositif présente plusieurs modules de mesure (26) qui sont disposés perpendiculairement à la direction de roulement (F) du pneu (12) et reliés à un dispositif d'évaluation commun (30) ;
dans lequel les dispositifs d'éclairage (4) sont réalisés de telle sorte que les différentes lignes lumineuses (6) sont codées de manière à pouvoir être identifiées et en particulier affectées de manière univoque à l'un des modules de mesure (26) ;
**caractérisé en ce que** les lignes lumineuses (6) sont codées temporellement et **en ce que** le dispositif d'éclairage (4) est réalisé de telle sorte que les lignes lumineuses (6) sont projetées non pas simultanément, mais selon un ordre chronologique prédéfini sur la surface de roulement du pneu (12).

2. Dispositif selon la revendication 1, dans lequel les dispositifs d'éclairage (4) des modules de mesure (26) sont réalisés respectivement de manière à projeter sur la sculpture un motif qui englobe plusieurs lignes lumineuses (6), les dispositifs d'éclairage (4) présentant en particulier chacun au moins un élément optique diffractif (46) réalisé de manière à générer un tel motif.

3. Dispositif selon l'une quelconque des revendications précédentes, dans lequel les dispositifs de capture d'images (18) présentent respectivement au moins un élément optique (22, 23), en particulier une lentille cylindrique, réalisée de manière à déformer la zone de capture d'images du dispositif de capture d'images (18), en particulier à densifier la zone de capture d'images parallèlement à la direction de roulement (F) du pneu (12) et/ou à l'élargir perpendiculairement à la direction de roulement (F) du pneu (12).

4. Dispositif selon l'une quelconque des revendications précédentes, dans lequel le dispositif de capture d'images (18) présente un capteur d'image de zone (8) qui, dans les deux directions de sa surface, comporte un nombre différent de pixels et qui est disposé de telle sorte que la direction qui présente le nombre de pixels le plus élevé, est parallèle à la direction de roulement (F) du véhicule automobile (10).

5. Dispositif selon l'une quelconque des revendications 2 à 4, dans lequel les modules de mesure (26) se trouvent les uns à côté des autres et où les éléments optiques diffractifs (46) des modules de mesure (26) directement voisins sont tournés dans le sens contraire les uns par rapport aux autres, de manière à générer des motifs lumineux codés différemment.

6. Dispositif selon l'une quelconque des revendications précédentes, dans lequel les modules de mesure (26) sont réalisés de telle sorte que les dispositifs d'éclairage (4) et les dispositifs de capture d'images (18) sont disposés de manière décalée les uns par rapport aux autres dans la direction de roulement (F) du pneu (12) à mesurer.

7. Dispositif selon l'une quelconque des revendications précédentes, dans lequel l'angle d'ouverture $\varphi$ du dispositif de capture d'images (18) et l'angle d'éventail du plan lumineux (5) du dispositif d'éclairage (4) est de $\pm 20°$ et où l'angle $\delta$ entre la direction d'éclairage du dispositif d'éclairage (4) et la direction de capture d'images du dispositif de capture d'images (18) se situe entre 20° et 45°, en particulier à 40°.

8. Dispositif selon l'une quelconque des revendications précédentes, présentant au moins un capteur supplémentaire (28) réalisé de manière à détecter l'approche d'un pneu (12) et/ou l'éclairage de la sculpture du pneu.

9. Procédé de mesure de la sculpture de la surface de roulement d'un pneu (12) monté sur un véhicule automobile (10) avec un dispositif selon l'une quelconque des revendications précédentes, le procédé consistant à :

faire rouler le véhicule automobile avec le pneu (12) à mesurer au-dessus du dispositif ;
projeter avec les dispositifs d'éclairage (4) respectivement au moins une ligne lumineuse (6) sur la surface de roulement du pneu (12) à mesurer, sachant que les lignes lumineuses (6) sont codées temporellement, les lignes lumineuses (6) n'étant pas projetées simultanément, mais selon un ordre chronologique prédéfini, sur la surface de roulement du pneu (12) ;
capturer avec les dispositifs de capture d'images (18) respectivement au moins une image réfléchie de la surface de roulement ;
identifier les lignes lumineuses (6) dans les images capturées et les affecter à l'un des dispositifs d'éclairage (4) ;
évaluer les images capturées des lignes lumineuses (6) afin de déterminer la profondeur de la sculpture.

10. Procédé selon la revendication 9, ce procédé consistant en outre à déterminer la vitesse du pneu (12) et à interrompre le procédé lorsqu'une vitesse maximale autorisée est dépassée.

11. Procédé selon la revendication 9 ou 10, ce procédé consistant en outre à comparer la profondeur de sculpture déterminée à une valeur limite prédéfinie et à émettre un avertissement lorsque la profondeur de sculpture déterminée est en-deçà de la première valeur limite prédéfinie.

12. Procédé selon l'une quelconque des revendications 9 à 11, ce procédé consistant en outre à comparer entre elles les profondeurs de sculpture définies pour les pneus (12) d'un essieu et à émettre un avertissement lorsque la différence entre les profondeurs de sculpture des pneus (12) d'un essieu sont en-deçà d'une deuxième valeur limite prédéfinie.

13. Procédé selon l'une quelconque des revendications 9 à 12, ce procédé consistant en outre à optimiser les paramètres d'image, en particulier l'intensité lumineuse du dispositif d'éclairage (4) et/ou le temps d'intégration du dispositif de capture d'images (18).

Fig. 1

Fig. 2

**Fig. 3**

R1 R2 R3 R4 R5

12

16

K

Z

Y

14

6

φ

18

8

**Fig. 4a**

R1 R2 R3 R4 R5

12

20 20

14

6

**Fig. 4b**

Fig. 5

Fig. 6

Fig. 7a

Fig. 7b

**Fig. 8a**

**Fig. 8b**

Fig. 9

**Fig. 10**

Fig. 11

Fig. 12

Fig. 13

EP 2 936 049 B1

Fig. 14

EP 2 936 049 B1

**EP 2 936 049 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19705047 A1
- EP 1394503 B1
- DE 4316984
- WO 9707380 A2
- DE 1809459
- EP 0469948 A1
- DE 102009016498 A1
- DE 102006062447 A1
- EP 0469948 B1
- EP 1952092 B1
- US 7578180 B2
- US 2012008148 A1
- US 2008256815 A1
- JP 2008185511 A
- WO 2008061770 A1